(19) Europäisches Patentamt
European Patent Office
Office européen des brevets

(11) EP 3 109 801 A1

(12) EUROPEAN PATENT APPLICATION

(43) Date of publication:
28.12.2016 Bulletin 2016/52

(51) Int Cl.:
$G06N\ 7/00^{(2006.01)}$

(21) Application number: 15174186.5

(22) Date of filing: 26.06.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(71) Applicant: National University of Ireland, Galway
Galway (IE)

(72) Inventors:
• Hegde, Vinod Kumar Gajanana
Galway (IE)
• Krnjacic, Milovan
Galway (IE)
• Hauswirth, Manfred
Galway (IE)

(74) Representative: Brophy, David Timothy
FRKelly
27 Clyde Road
Dublin D04 F838 (IE)

(54) DATA ANALYSIS AND EVENT DETECTION METHOD AND SYSTEM

(57) A computer-implemented method is presented of processing a data set to detect clusters of outlier data, and of using the processed data to automatically detect outlier events based on sensor data and to issue alerts when such events are detected. The outlier detection technique employs two infinite model mixtures, one tailored to detection of non-outlier data, and the other tailored to detection of outlier data. Clusters of data are created and labelled as non-outlier or outlier clusters according to which infinite mixture model generated the clusters.

FIG. 1

## Description

### Technical Field

This invention relates to methods and systems for analysing data, and in particular to the detection of clusters of outlier data in data sets.

### Background Art

In recent years, there has been a surge in the real world data generated by sensors on mobile phones as well as sensors embedded into various physical infrastructures. Data from GPS sensors, accelerometers on mobile phones capture fine-grained activities of individual users. On the other hand, sensors such as RFID tags, traffic polling systems, motion detectors for buildings etc. generate data, based on activities of population.

These huge amounts of real world data have been extensively used by researchers to understand specific patterns of human activity. Particularly, analysing unusual trends in behaviour exhibited by users in the context of hourly, daily and weekly periodic variations is crucial to gain useful insights about real world situations. For example, a popular cultural event held in a city would be reflected in the amount of vehicles entering the toll gate of a city. Similarly, a minor increase in the number of vehicles entering a city can be due to a less famous event. These events in the real world can be mapped to unusually high count values in the corresponding time series data of user visits.

Detecting such events in an unsupervised manner demands detecting outliers in time series of periodic count data. Also, it is crucial that outliers are classified into various categories based on their values. This lets us identify and categorize events based on the magnitude of increased counts due to them.

Modelling univariate data and detecting outliers has been extensively studied in the field of statistics and machine learning.

One category of methods is based on Markov Modulated Poisson Processes (MMPP), such as described in A. Ihler et al., "Adaptive event detection with time-varying poisson processes," Proceedings of the 12th ACM SIGKDD International Conference on Knowledge Discovery and Data Mining. Philadelphia, PA, USA: ACM, 2006, pp. 207-216. The motivation behind MMPP based outlier detection models is the fact that univariate time series data has no clear boundary to differentiate abnormal high count value outliers from the normal periodic counts. An MMPP based model not only detects outliers but also derives Poisson rate parameters, which makes it highly applicable to analyse time series of count data. This allows one to infer about events based on data generated by periodic human activities. Periodic count data may be modelled by Poisson process regulated by a Markov chain with a fixed number of states. The effectiveness of the approach has been studied on vehicular traffic data and user presence data to detect events.

Some other examples of MMPP approaches to outlier detection include A. Pozdnoukhov and C. Kaiser, "Space-time dynamics of topics in streaming text," Proceedings of the 3rd ACM SIGSPATIAL International Workshop on Location-Based Social Networks. Chicago, Illinois: ACM, 2011, pp. 1-8, in which the number of tweets generated by users have been modelled using MMPP to quantify abnormal volume of tweets. Modelling and predicting voice packet data with a version of MMPP has been studied in H. Heffes and D. Lucantoni, "A markov modulated characterization of packetized voice and data traffic and related statistical multiplexer performance," IEEE Journal on Selected Areas in Communications, vol. 4, no. 6, pp. 856-868, 1986. S. L. Scott, "A bayesian paradigm for designing intrusion detection systems," Computational statistics & data analysis, vol. 45, no. 1, pp. 69-83, 2004, which studies identifying network intrusion using MMPP. These works have analysed how variations of MMPP model can be used to detect outliers and thus unusual bursts in human activity which correspond to events.

However, any MMPP based outlier detection model has the assumption that most of the periodic count data can be modelled by a Poisson distribution with fixed rate parameter. This assumption about the nature of human generated periodic count data does not always hold good as the data typically exhibit multimodality with unknown number of modes.

Outlier detection solutions based on previously described finite mixture models face the problem of either underfitting, if few mixture components are assumed or overfitting otherwise. This potentially leads to less accuracy in detecting outliers.

An alternative approach to analysing data sets is based on an infinite mixture model to fit data sets more accurately compared to a parametric model. However, infinite mixture models do not provide for the identification of outliers in a data set and thus cannot be used for outlier detection. For examples of nonparametric Bayesian models which can determine the right number of mixture components and mixture weights while estimating the probability density of data, see A. Haghighi and D. Klein, "Unsupervised coreference resolution in a nonparametric bayesian model," Proceedings of the 45th Annual Meeting of the Association for Computational Linguistics, Prague, Czech Republic, June 2007, pp. 848-855; C. Kemp et al., "Learning systems of concepts with an infinite relational model," Proceedings of the 21st National Conference on Artificial Intelligence. Boston, Massachusetts: AAAI Press, 2006, pp. 381-388; and E. B. Sudderth et al., "Describing visual scenes using transformed objects and parts," Int. J. Comput. Vision, vol. 77, no. 1-3, pp. 291-330, 2008.

Disclosure of the Invention

There is provided a method of processing a data set to detect outliers, comprising the steps of:

a) receiving as an input a data set of N data points;
b) iterating through the entire data set a plurality of times, wherein each iteration comprises:

(i) inferring a prior cluster profile having one or more clusters, each of which is identified as a non-outlier cluster or an outlier cluster, and each of which is characterised by its own probability distribution parameters, and by a weighting based on the relative number of data points assigned to the cluster, the prior cluster profile being inferred according to the output of the preceding iteration or, on the first iteration, according to an initial inferred cluster profile;
ii) for each data point in the data set:

(aa) evaluating the probability that the data point belongs to each of the existing clusters in the prior cluster profile and that it belongs to a new cluster identified as a non-outlier cluster or an outlier cluster;
(bb) assigning the data point to one of the existing clusters or a new cluster in a probabilistic fashion according to the evaluated probabilities in (aa);

iii) updating the prior cluster profile to reflect the assignment of the data points to existing or new clusters and returning the number of clusters, the identification of each cluster as outlier or non-outlier, and the probability distribution parameters and weightings for each cluster, for use as a prior cluster profile in the next iteration;

c) after a predetermined number of iterations through the entire data set, computing the most likely number of clusters in the data set according to all iterations in order to label data items and clusters as non-outliers and outliers along with determining the parameters for the cluster.

The method relies on modelling the data with two infinite mixtures: a first infinite mixture model describes clusters of non-outlier data, while a second infinite mixture model describes clusters of outlier data.
Each cluster is represented by a probability distribution, i.e. parameters which generate a distribution of data into which the data points of that cluster fit. The cluster also has a weighting corresponding to the number of data points in that cluster. Based on these factors, it is possible to evaluate the probability that a new data point belongs to that cluster: how likely it is that the data point would have been generated by a probability distribution with certain parameters, with clusters having high weightings being more likely to "attract" the new data point.
In addition, there is a probability in every case that the data point is placed into its own new cluster. Such a new cluster can be assigned probability distribution parameters according to one of two models: a first model has probability distribution parameters typical of non-outlier (low-value) data points, while a second model has probability distribution parameters typical of outlier (high-value) data points. Thus a new cluster can be labelled as containing non-outlier data points or as containing outlier data points according to which model was used to generate it.
From the foregoing it will be appreciated that two infinite mixtures are iteratively evaluated: a first mixture is generated by the prior clusters labelled as non-outlier and any new clusters generated as new non-outlier clusters, while the second mixture is generated by the prior clusters labelled as outlier and any new clusters generated as new outlier clusters.
The data point is assigned probabilistically into one cluster or another according to the probabilities calculated for it belonging to each of the existing cluster or to a new cluster (outlier or non-outlier), and in this way the cluster members are dynamically assigned and reassigned during each iteration of the data set using two infinite mixtures. Convergence tends to occur after multiple iterations, at which point the most likely (e.g. mode) number of clusters can be determined for the data set, along with the labels for which clusters are outliers and which data points are members of each cluster.
In this way an infinite mixture model, or rather a mixture of two infinite mixture models, can be used to both identify an appropriate number of cluster for the data as well as to label data points as outliers.
In contrast to known outlier detection methods, no prior knowledge about the number of clusters is required. The method can thus operate blind on any new data set whose properties are not known prior to analysis. However if any information is available about a data set, it can be incorporated into the model by setting appropriate values to hyper-parameters.
Preferably, the initial inferred cluster profile is generated by:

i) initialising a non-outlier cluster having first probability distribution parameters and a weighting indicating the relative number of data points assigned to the non-outlier cluster; and optionally

ii) initialising an outlier cluster having second probability distribution parameters and a weighting indicating the relative number of data points assigned to the outlier cluster.

Preferably, all data points are initially assigned to the non-outlier cluster.

In this way, the cluster profiles grow organically during the iterations through the data set from a single non-outlier cluster (and optionally an outlier cluster) and the infinite mixture model converges on the optimum mix of clusters.

By initialising the cluster profiles in this way, minimal assumptions are made about the nature of the underlying process generating the data.

Preferably, for each point in the data set, the data point is identified as being a non-outlier data point or an outlier data point.

Further, preferably, if the data point is identified as a non-outlier data point, then in step (aa) the probability is evaluated that it belongs to a new cluster identified as a non-outlier cluster, using a distribution function typical of non-outlier data, whereas if the data point is identified as an outlier data point, then in step (aa) the probability is evaluated that it belongs to a new cluster identified as an outlier cluster, using a distribution function typical of outlier data.

The model maintains two probability functions for determining whether a data point is a member of a new cluster. One of the probability functions is characterised by the generative parameters typical of non-outlier data clusters, and the other characterised by the generative parameters typical of outlier data. For example, there may be two different hyper-parameter vectors associated with these two processes in a Poisson mixture model. Which of the two probability functions is selected will depend on whether the data point has been previously evaluated as more likely to be outlier or non-outlier.

Preferably, the evaluation of probabilities in step (aa) comprises evaluating the probability that the data point would be generated by the probability distribution parameters of each such cluster, modified by the weighting based on the relative number of data points assigned to the cluster.

Preferably, step (bb) (i.e. assigning the data point to an existing cluster or a new cluster) comprises, where the data point is assigned to a different cluster than it had previously been assigned to, removing the data point from the previous cluster and adding the data point to the new cluster, and updating the weightings accordingly.

Preferably, if the data point is assigned to a new cluster, said new cluster is added to the cluster profile and assigned a weighting for a cluster with a single member.

The method preferably further includes the step of, on each iteration through the data set, removing from the prior cluster profile any clusters with a single member.

This does not mean that the output of the process cannot include single-member clusters. For example, in an analysis of 10,000 data points where 5,000 of the data points had values of *3, 4 or 5,* and where 4,999 data points were *71, 72 or 73,* and where a single data point with a value of *100,000* was present, the expected final outcome would be three clusters, one centred around the values *3-5*, one centred around the values *71-73*, and one being an outlier cluster containing the single value *100,000.* On each iteration, that outlier cluster might be removed from the cluster profile, but it would almost inevitably pop up again in that iteration when the overwhelming likelihood of the *100,000* value forming a new outlier cluster was evaluated against the extremely low probabilities that it belonged to the 3-5 cluster or the *71-73* cluster. It can be imagined that very occasionally, because the data point is assigned to a cluster probabilistically, the *100,000* value would be allocated to (say) the *71-73* cluster but this would happen on a tiny fraction of the iterations. In the overwhelming number of iterations the number of clusters would be evaluated as 3 rather than 2, with the third cluster being an outlier with a single member.

Preferably, the probability distribution parameters are updated for each cluster in step (iii) after each iteration through the data set based on the data points assigned to each cluster at the end of that iteration.

Preferably, the probability distribution parameters of non-outlier clusters are characterised by a first hyper-parameter vector and those of outlier clusters are characterised by a second hyper-vector parameter.

The method is particularly applicable to Poisson processes, though it is applicable to any data set. By modelling the data using a hyper-parameter for non-outlier data and a different hyper-parameter for outlier data, the two infinite mixtures are generated, so that new clusters can not only be generated flexibly, but also can be labelled and identified as clusters of outlier data where this is indicated.

Further, preferably, each cluster is characterised by a random variable with a posterior probability distribution.

Preferably, the initial inferred cluster profile is initialised as a pair of clusters whose probability distribution parameters are generated according to the minimum and maximum values in the data set, respectively and which are labelled as non-outlier and outlier clusters, respectively.

There is also provided a computer program product comprising instructions which, when executed in a computing system are effective to cause the computer system to carry out the methods described above.

In another aspect there is provided a method of generating an alert in a system comprising one or more sensors, the method comprising:

(i) receiving a data series representing signals from said one or more sensors;
(ii) maintaining a data model, the data model comprising a cluster profile generated by a method described hereinabove, in which a plurality of clusters are identified, including at least one cluster identified as representative of non-outlier data and at least one cluster identified as representative of outlier data, each cluster having a probability distribution parameter;
(iii) calculating, for a plurality of data items in the data series, a best fit between each data item and at least one cluster in the cluster profile;
(iv) where the best fit is to a cluster identified as representative of outlier data, outputting an alert signal.

It can be seen that this enables data from real-world sensors to be monitored and analysed against a novel data model, generated according to the present invention, and to generate an alert if sensor signals best fit with the probability distribution of an outlier cluster.

In this aspect, preferably the method further comprises the step of generating the data model according to a method of any one of claims 1-13.

In a further, related aspect, there is provided a system comprising one or more sensors for detecting a condition and generating a signal in response thereto, a computing system operatively connected to receive data representative of signals from said one or more sensors, and an output interface for the computing system, the computing system being programmed with instructions which when executed carry out the method of generating an alert in a system.

Brief Description of the Drawings

The invention will now be further illustrated by the following description of embodiments thereof, given by way of example only with reference to the accompanying drawings, in which:

Fig. 1 is a plate notation diagram of the data model according to which the present invention operates;
Fig. 2 is a set of plots of posterior predictive density against four data sets;
Fig. 3 is a set of plots showing numbers of clusters obtained in the data sets;
Fig. 4 is a set of plots of posterior mean outlier probability for each of the data sets;
Fig. 5 is a comparative set of plots to Fig. 4 where the same data sets were analysed using an MMPP model;
Fig. 6 is a plot showing the performance of the technique of the invention as compared with an MMPP model;
Fig. 7 is a flowchart showing the overall operation of a software system embodying the analysis method of the invention;
Fig. 8 is a flowchart detailing the Gibbs sampler algorithm component of the software;
Fig. 9 is a flowchart of real time data analysis software analysing data against a data model produced using the techniques herein;
Fig. 10 is a block diagram of a computer system for analysing data sets;
Fig. 11 is a block diagram of a system for sensing real-world conditions and generating automated alerts when outlier conditions are detected;
Fig. 12 is a block diagram of a system such as in Fig. 11, deployed in a city's traffic monitoring network.

Detailed Description of Preferred Embodiments

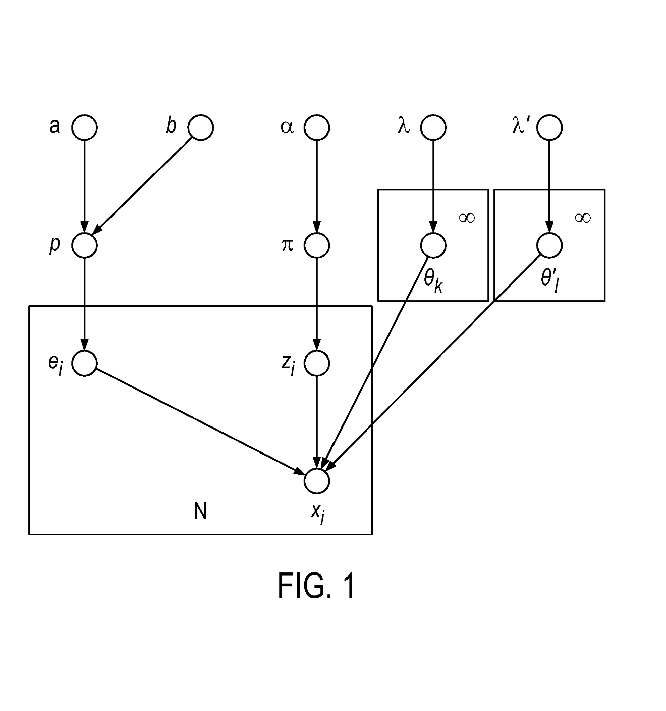

Fig. 1 shows a generative model in plate notation which is used as the basis for detecting outliers by nonparametrically fitting a count dataset and deriving the modes that generate anomalies of atypically high values. The model is based on the standard results of Dirichlet Process mixture model (see T. S. Ferguson, "A bayesian analysis of some nonparametric problems," The annals of statistics, pp. 209-230, 1973; and R. M. Neal, "Markov chain sampling methods for dirichlet process mixture models," Journal of computational and graphical statistics, vol. 9, no. 2, pp. 249-265, 2000) for nonparametric density estimation of a given dataset. Note that we use the term mixture component and cluster interchangeably in the following discussion.

The random variables in this nonparametric Bayesian model of Fig. 1 are defined as follows.

$$p|a,b \sim Beta(a,b) \quad e_i|p \sim Bernoulli(p)$$
$$\pi|\alpha \sim GEM(1,\alpha) \quad z_i|\pi \sim Discrete(\pi)$$
$$\theta_k|\lambda \sim G_0(\lambda) \qquad \theta_l'|\lambda' \sim G_0(\lambda')$$

Eq. 1

The model in Fig. 1 is generic and applicable to any data set. For illustrative purposes we give an example of the analysis using a data set that can be modelled with a Poisson mixture. While the analysis that follows shows data modelled as a Poisson mixture with Gamma distribution as a base distribution for sampling Poisson rate parameters, this is not essential to the method and the mathematical analysis can be adapted to other data models based on the Plate Notation model. Data can be modelled with a Gaussian distribution with a Gaussian distribution to sample mean and standard deviation of Gaussian distribution.

The data $x_i$ have the Poisson likelihood given by:

$$x_i|e_i, z_i, \{\theta_k\}_{k=1}^\infty, \{\theta_l'\}_{l=1}^\infty \sim e_i F(\theta_{z_i}') + (1 - e_i) F(\theta_{z_i})$$

Eq. 2

Here, we consider N items x = $\{x_1, x_2, ..., x_N\}$ which are discrete count data from an unknown Poisson mixture.

$p$ is a random variable which has a Beta prior distribution with $a, b$ as hyper-parameters. $p$ represents the probability that a count value in the dataset is an outlier with unusually high value.

$e_i$ is a Bernoulli random variable which would be 1 when the data $x_i$ is an outlier.

$\pi$ is a sample from a stick breaking process (see J. Sethuraman, "A constructive definition of dirichlet priors," Statistica Sinica, vol. 4, pp. 639-650, 1994) denoted by GEM with the parameter $\alpha$. It represents the discrete distribution over the cluster indices of the parameter vectors that exist for the mixture component of the dataset.

$z_i$ represents the index of cluster chosen for the data $x_i$.

$\theta_l$ represents a sample from the base distribution with parameters $\lambda'$ and $\theta_k$ is a sample from the distribution parametrized by $\lambda$. θl, θk represent the Poisson rate parameter for outlier and non-outlier clusters respectively.

Since we need to model an unknown Poisson mixture data, we have used Gamma distribution as the base distribution Go which is the conjugate prior distribution for Poisson distribution. Thus, $\lambda'$ and $\lambda$ are hyper parameter vectors defined as $\lambda$ = (*shape', rate'*) and $\lambda$ = (*shape, rate*) for $\theta_l$, $\theta_k$ respectively.

The data $x_i$ have the Poisson likelihood given by Equation (2). $x_i$ would be generated by a Poisson distribution with rate parameter $\theta_l$ if it is an outlier data and by a Poisson distribution with rate parameter $\theta_k$ otherwise. The data x is modelled with two infinite mixtures as we need to model an unknown number of non-outlier and outlier clusters present in the data.

In Figure 1, we show the Bayesian network for the generative model described. Here, the hyper parameters whose values are known are marked dark and random variables with unknown distribution are marked white. The parameter learning and inference for this network involves obtaining the joint distribution of the random variables. We use one of the widely adopted Gibbs sampling, a Markov Chain Monte Carlo (MCMC) algorithm which requires the full conditional distributions for every random variable involved in order to obtain samples from the joint posterior distribution. We now show the conditional distributions derived for each of the random variables.

Here $e_{-i}$ denotes the set with all $e_j$, $j \neq i$. We use similar notation for $x_{-i}$, $z_{-i}$. $x_k$ denotes the set of data items belonging to the $k^{th}$ cluster. **e** denotes the set with all $e_j$.

$$Pr(e_i = 1|x_i, \mathbf{e}_{-i}, a, b, z_i, \{\theta_k\}_{k=1}^\infty, \{\theta_l'\}_{l=1}^\infty)$$
$$= Pr(e_1 = 1|\mathbf{e}_{-i}, z_i, \{\theta_k\}_{k=1}^\infty, \{\theta_l'\}_{l=1}^\infty)$$
$$Pr(x_i|e_i = 1, z_i, \{\theta_k\}_{k=1}^\infty, \{\theta_l'\}_{l=1}^\infty)$$
$$= Pr(e_i = 1|\mathbf{e}_{-i}, a, b) F(x_i|\theta_{z_i}')$$

Eq. 3

We can derive the conditional distribution of **e** as follows:

$$Pr(p|a,b) = p^{a-1}(1-p)^{b-1}\frac{\Gamma(a+b)}{\Gamma(a)\Gamma(b)}$$

$$Pr(e_1,\ldots,e_n|p) = p^{\sum e_i}(1-p)^{n-\sum e_i}$$

$$Pr(e_1,\ldots,e_n|a,b)$$

$$= \frac{\Gamma(a+b)}{\Gamma(a)\Gamma(b)}\int p^{(\sum e_i + a - 1)}(1-p)^{(n-\sum e_i + b - 1)}dp$$

$$= \frac{\Gamma(a+b)\Gamma(\sum e_i + a)\Gamma(n - \sum e_i + b)}{\Gamma(a)\Gamma(b)\Gamma(n+a+b)}$$

Eq. 4

$$Pr(e_i = 1|\mathbf{e}_{-i},a,b) = \frac{Pr(\mathbf{e}|a,b)}{Pr(\mathbf{e}_{-i}|a,b)}$$

$$= \frac{\Gamma(a+\sum \mathbf{e}_i)\Gamma(n-1+a+b)}{\Gamma(a+\sum \mathbf{e}_{-i})\Gamma(n+a+b)}$$

$$= \frac{a+\sum \mathbf{e}_{-i}}{a+b+n-1}$$

Eq. 5

In similar fashion to Equation (5) we can derive that:

$$Pr(e_i = 0|\mathbf{e}_{-i},a,b) = \frac{b+n-\sum \mathbf{e}_{-i}}{a+b+n-1}$$

Eq. 6

$$Pr(e_i = 0|x_i,\mathbf{e}_{-i},a,b,z_i,\{\theta_k\}_{k=1}^{\infty},\{\theta_l'\}_{l=1}^{\infty})$$

$$= Pr(e_i = 0|\mathbf{e}_{-i},a,b)F(x_i|\theta_{z_i})$$

Eq. 7

similar to Equation (3). We use Chinese Restaurant Process (see D. Aldous, "Exchangeability and related topics," École d'Été de Probabilités de Saint-Flour XIII, 1983, pp. 1-198, 1985) as the basis for deriving the clustering property of the dataset. The probability that a data item falls into one of the active cluster $j$ with parameter $\varphi$ is derived as follows. Note that $\varphi$ is equal to an existing value of $\theta_k$ if the cluster $j$ is marked as non-outlier cluster and $\theta_k'$ otherwise.

$$Pr(z_i = j|\mathbf{x},\alpha,e_i = 1,\mathbf{z}_{-i},\{\theta_k\}_{k=1}^{\infty},\{\theta_l'\}_{l=1}^{\infty})$$

$$= Pr(z_i = j|x_i,\alpha,\mathbf{z}_{-i},\phi)$$

$$= Pr(z_i = j|\alpha,\mathbf{z}_{-i},\phi)Pr(x_i|z_i = k,\alpha,\mathbf{z}_{-i},\phi)$$

$$= Pr(z_i = j|\alpha,\mathbf{z}_{-i})Pr(x_i|\phi)$$

$$= \frac{n_{j,-i}}{n+\alpha-1}F(x_i|\phi)$$

Eq. 8

When the data belongs to an outlier cluster with $e_i = 1$, the probability that $z_i$ gets a new value of cluster index $K + 1$ where already $K$ clusters exist is given by

$$
\begin{aligned}
&Pr(z_i = K + 1 | \mathbf{x}, \alpha, e_i = 1, \mathbf{z}_{-i}, \lambda, \lambda') \\
&= Pr(z_i = K + 1 | x_i, \alpha, \mathbf{z}_{-i}, \lambda') \\
&= Pr(z_i = K + 1 | \alpha, \mathbf{z}_{-i}, \lambda') Pr(x_i | z_i = K + 1, \alpha, \mathbf{z}_{-i}, \lambda') \\
&= Pr(z_i = K + 1 | \alpha, \mathbf{z}_{-i}) Pr(x_i | \lambda') \\
&= \frac{\alpha}{n + \alpha - 1} \int F(x_i | \theta') G_0(\theta' | \lambda') d\theta'
\end{aligned}
$$

Eq. 9

The conditional distributions for the parameter vectors of the data can be determined as follows:

$$
\begin{aligned}
Pr(\theta'_l | \mathbf{x}, \mathbf{e}, \mathbf{z}, \lambda') &= Pr(\theta'_l | \mathbf{x}_l, \lambda') \\
&\propto G_0(\theta'_l | \lambda') \mathbf{L}(\mathbf{x}_l | \theta'_l)
\end{aligned}
$$

Eq.10

If a new cluster is formed for generating outlier data $x_i$, the conditional distribution for the parameter of that cluster $\theta'_l$ is derived as follows:

$$
Pr(\theta'_l | x_i) = \frac{G_0(\theta'_l) F(x_i | \theta'_l)}{\int G_0(\theta') F(x_i | \theta')}
$$

Eq. 11

We can obtain the conditional distributions for the cluster indices and parameters when $e_i = 0$ in a similar fashion described in Equations (7) - (11).
The Gibbs sampler is used to derive the posterior samples of random variables in question using the full conditional distributions described above. Specifically, at each MCMC sample, we infer on the number of mixture components or clusters in the data and their weights and parameter values. Additionally, we label each of the inferred clusters as outlier or non-outlier cluster and the data belonging to those clusters as outlier data and non-outlier data respectively. We give the details of the direct Gibbs sampling in Algorithm 1 that we use for the inference.

```
1: function INITIALISEPARAMETERS(x)
2:     e ← 0
3:     theta'₁ ← maximum(x)
4:     theta₁ ← minimum(x)
5:     (rate', rate) ← (1, 1)
6:     (shape', shape) ← (max(x), min(x) + 1)
7: end function
8: function GIBBSSAMPLER(x,e,z,θ)
9:     IntialiseParameters(x)
10:    At any iteration t with t > 1 of the sampling
11:    For i = 1, ..., n
12:    if xᵢ is the single element in its cluster then remove
the cluster, it's parameter and decrement C by 1
13:    end if
14:    Sample eᵢ with the following probabilities
```

Choose a non-outlier cluster parameter$\theta_{i(t-1)}$ where $x_i$ has the maximum density

$$Pr(e_{it} = 0) \propto \frac{a + \sum e_{-i}}{a + b + n - 1} F(x_i | \theta_{i(t-1)})$$

Choose an outlier cluster $\theta'_{i(t-1)}$ where $x_i$ has the maximum density

$$Pr(e_{it} = 1) \propto \frac{b + n - \sum e_{-i}}{a + b + n - 1} F(x_i | \theta'_{i(t-1)})$$

(... continued on next page)

15:     Draw a sample for the cluster index with the probabilities as follows

$$Pr(z_{it} = k, k <= C) \propto \frac{n_{k,-i}}{n + \alpha - 1} F(x_i | \theta_{k(t-1)})$$

16:     **if** $e_{it}$ is 1 **then**

$$Pr(z_{it} = k, k = C+1) \propto \frac{\alpha}{n + \alpha - 1} \int F(x_i | \theta) G_0(\theta | \lambda') d\theta$$

17:     **else**

$$Pr(z_{it} = k, k = C+1) \propto \frac{\alpha}{n + \alpha - 1} \int F(x_i | \theta) G_0(\theta | \lambda) d\theta$$

18:     **end if**
19:     **if** a new cluster is formed **then**

$$C = C + 1$$

20:        and mark the new cluster as an outlier cluster if $e_{it}$ is 1 or 0 otherwise
21:     **end if**
22:     For all clusters marked as outlier clusters, sample the cluster parameters from the posterior distributions

$$Pr(\theta_{kt}) \propto G_0(\theta_{k(t-1)} | \lambda') F(\mathbf{x}_{k(t-1)} | \theta_{k(t-1)})$$

23:     For all clusters marked as non-outlier clusters, sample the cluster parameters from the posterior distributions

$$Pr(\theta_{kt}) \propto G_0(\theta_{k(t-1)} | \lambda) F(\mathbf{x}_{k(t-1)} | \theta_{k(t-1)})$$

24: **end function**

We initialise two clusters where one represents the non-outlier data and the other represents outlier data. The Poisson rate parameters for these two clusters are initialised using the minimum and maximum values of the dataset.

All data items are initially assigned to the non-outlier cluster and are marked as non-outlier data items. The hyper-parameters of Gamma distribution are initialised using the simple statistics of the data, namely the maximum and minimum. A Gamma distribution with shape parameter k and rate parameter 1 has a mean and variance value as *k*.

The restriction on the Gamma prior distribution for drawing the Poisson rate parameters for outlier clusters thus results in the formation of outlier clusters with Poisson rate parameters biased towards the maximum value in the dataset. Similarly, Poisson rate parameters of non-outlier clusters are biased towards the minimum value in the dataset.

At each iteration of the algorithm, any clusters with a single member are removed from the cluster profile. For such clusters, where they truly represent the existence of a single outlier or non-outlier data item that does not fall properly into one of the other clusters, the likelihood is that this single item cluster will be recreated during most iterations and thus will appear in the final cluster profile. Although not specified in the algorithm there is an addition to the rule that any single-member clusters are removed, which is that if the removed single-element cluster is the only non-outlier cluster, or (more commonly) the only outlier cluster, then an empty cluster of the same kind (outlier or non-outlier) is generated, so that there is always at least one cluster of each kind. The reason for this is that line 14 of the Algorithm assumes and requires a cluster of each kind to evaluate against.

During each iteration, all data items of the data set are processed in turn. A data item is labelled as an outlier or non-outlier. The data item is then assigned to one of the existing clusters or assigned to a new cluster with certain probabilities.

Specifically, the probability is calculated that the data item belongs to each existing cluster, based on the probability distribution corresponding to that cluster and the relative weighting of the cluster. The probability is also calculated that the data item forms a new cluster. If the data item was flagged as a non-outlier, then the probability distribution parameters for this putative new cluster is sampled from a probability distribution with hyper-parameter of minimum (preferably) of the data value and with the data value currently being tested. Conversely if the data item was flagged as an outlier, then the probability distribution parameters for this putative new cluster is sampled from a probability distribution with hyper-parameter of maximum (preferably) of the data value and with the data value currently being tested.

Accordingly, if there are already *K* clusters, then *K+1* probabilities are evaluated, and the data item is assigned to one of the existing clusters or to the new cluster probabilistically according to those calculated probabilities.

If data item is assigned to a new cluster, the new cluster is marked as an outlier cluster if the assigned data item has been marked as outlier and as non-outlier cluster otherwise. For such a new cluster, it keeps the probability distribution parameters sampled from a base distribution with appropriate hyper-parameters, and gets a relative weighting corresponding to a single data item member.

The weightings for all the clusters are readjusted after the processing of each data item in the data set, but probability distribution parameters for the clusters are left unchanged during any particular iteration through the data set.

The cluster parameters are updated following each iteration for outlier clusters and non-outlier clusters using the samples from corresponding base distributions. This results in a modified cluster profile which is used as the prior cluster profile for the next iteration. The cluster profile will thus typically contain several clusters, some of which may be identified as outliers, and the rest of which are non-outliers. For each cluster the parameters of the probability distribution are calculated based on the cluster membership and the appropriate hyper-parameter for non-outlier or outlier clusters as appropriate. The cluster profile also identifies which data items are in which cluster, and the appropriate weighting.

After all the iterations, we use all samples to compute the number of clusters in the data using the posterior mode of number of active clusters in samples. The number of clusters is used to select matching samples which we use to compute outlier probability, cluster parameter values, cluster weights. We use the same samples to compute the posterior mode of the cluster outlier labels to identify clusters as outlier and non- outlier clusters. This completes the training and the population is now regarded as properly characterized.

In use, data items can be analysed in real time against the final cluster profile that was generated using the posterior mode of clusters as described above. New data items can be evaluated against the various clusters to determine which cluster provides the maximum probability density for membership of that data item. If the new data item falls into a cluster which is labelled as an outlier cluster, then it can be considered as an anomalous data and appropriate action can be taken (for example in an automated monitoring system, an alarm can be generated). Typically, the data items processed in this way are also stored in a database allowing retraining of the model using updated data after a suitable period of time has elapsed.

SIMPLIFIED EXAMPLE FOR EXPLANATORY PURPOSES

The following is a simplified explanation of how the process might operate using a very small data set and a very small number of iterations. It is not intended to provide a mathematically accurate embodiment but rather to illustrate the principles of operation. In other words, various "probabilities" and "rate parameters" are assumed which are not mathematically rigorous and the example describes a very small data set which might give rise to different cluster properties if evaluated rigorously according to the mathematical treatment herein. After this example, we continue with results which have been obtained rigorously, therefore this following example is to be taken as explanatory and illustrative of general principles only.

The data set is a time series of count events. The counts might be, for instance, the number of people passing a door sensor in a 5 minute interval with the successive values showing the count for successive five-minute intervals. The count data are:

[12, 7, 5, 12, 14, 21, 13, 6, 7, 7, 15, 3 5, 5, 6, 7, 13, 2 3, 12, 8, 6, 7, 14, 10]

Firstly, we initialise our hyper-parameters of Gamma distribution with the minimum and maximum values, so that $\lambda = 5$, $\lambda' = 35$.

We then create a non-outlier cluster with a rate parameter of 5, containing all of the data items. We will denote this cluster as C1. Each cluster has the following data associated with it {rate parameter, weighting, [data item 1, data item 2, ...], outlier identifier where NO is a non-outlier cluster and O is an outlier cluster}:

C1: {rate = 5, weighting = 23, [12, 7, 5, 12, 14, 21, 13, 6, 7, 7, 15, 35, 5, 6, 7, 13, 23, 12, 8, 6, 7, 14, 10], NO}

We also initialise an outlier cluster C2 as follows:

C2: {rate = 35, weighting = 0, [], O}

*Iteration 1*

We begin by looking for clusters with a single member. C2 has zero members and is not removed (only single-member clusters are removed).

We then iterate through the data items in turn. For each we evaluate if they are more likely to be outliers or not. All data items are (we shall suppose, without mathematically evaluating the formulae) non outliers, apart from two identified outliers in values 23 and 35.

*First data point*

So for the first item [12], we see it is a non-outlier and we then evaluate the probability that it belongs to C1 or to a new non-outlier cluster with a rate parameter sampled from a distribution whose properties are determined by the data value itself and the hyper-parameter $\lambda$. Let us suppose that the relative probabilities are evaluated as (these being notional rather than properly calculated values) 0.65 that it belongs to C1 and 0.35 that it belongs to a new cluster C3 with rate = 9.

Then we draw a sample based on these probabilities and the less likely option results, so that a new cluster is formed resulting in :

C1: {rate = 5, weighting = 22, [7, 5, 12, 14, 21, 13, 6, 7, 7, 15, 35, 5, 6, 7, 13, 23, 12, 8, 6, 7, 14, 10], NO}
C2: {rate = 35, weighting = 0, [], O}
C3: {rate = 9, weighting = 1, [12], NO}

*Second data point*

The next data item [7] is a non-outlier and so probabilities are calculated for membership of clusters as follows: C1 (0.65), C2 (0.2), C3 (0.15) where C3 is a potential new cluster with rate parameter 6. (C3 is not formed at this stage, it is simply considered and will only be formed if ultimately the data point is assigned to it.) Note the influence of the weightings: the data point is attracted to the largest cluster, despite both C1 and C2 having rate parameters that are equidistant from the data value. We then draw a sample based on these probabilities and C1 is reassigned into C1. The cluster profile looks the same as before data item [7] was processed.

*Remaining data points*

The process continues in this way for each data item until we reach the item with value [35]. After the previous item [15] is processed the cluster profile looks like this:

C1: {rate = 5, weighting = 17, [7, 5, 13, 6, 7, 35, 5, 6, 7, 13, 23, 12, 8, 6, 7, 14, 10], NO}
C2: {rate = 35, weighting = 0, [], O}
C3: {rate = 9, weighting = 4, [12, 12, 14, 7], NO}
C4: {rate = 18, weighting = 2, [21, 15], NO}

The process notes 35 is an outlier data item, and evaluates the probability density for membership of C1, C2, C3, C4 and a new cluster C5. C5 is assumed to be an outlier cluster with a rate parameter 37 obtained by sampling from a distribution whose properties are determined by the data value itself and the hyper-parameter $\lambda$'. After evaluating the probabilities a sample is drawn and the data item is assigned to the existing outlier cluster, C2, which results in:

C1: {rate = 5, weighting = 16, [7, 5, 13, 6, 7, 5, 6, 7, 13, 23, 12, 8, 6, 7, 14, 10], NO}
C2: {rate = 35, weighting = 1, [35], O}
C3: {rate = 9, weighting = 4, [12, 12, 14, 7], NO}
C4: {rate = 18, weighting = 2, [21, 15], NO}

*End of 1<sup>st</sup> iteration*

After all data points are evaluated, the clusters look like this:

C1: {rate = 5, weighting = 11, [7, 5, 13, 6, 7, 5, 6, 7, 8, 6, 7,], NO}
C2: {rate = 35, weighting = 2, [35, 23], O}
C3: {rate = 9, weighting = 6, [12, 12, 14, 7, 12, 10], NO}
C4: {rate = 18, weighting = 4, [21, 15, 13, 14], NO}

Up to this point, each cluster has had its weightings dynamically re-evaluated as each data point is assigned, but the rate parameters for each cluster are kept unchanged from their initial assignment. However, once all data points are assigned, as above, the cluster rate parameters for each cluster are updated using samples from the data points within the cluster and the hyper-parameters $\lambda$ or $\lambda'$ as appropriate.

This results in the following cluster profile which is used as the prior cluster profile at the start of the next iteration:

C1: {rate = 7, weighting = 11, [7, 5, 13, 6, 7, 5, 6, 7, 8, 6, 7,], NO}
C2: {rate = 31, weighting = 2, [35, 23], O}
C3: {rate = 11, weighting = 6, [12, 12, 14, 7, 12, 10], NO}
C4: {rate = 17, weighting = 4, [21, 15, 13, 14], NO}

This cluster profile is also stored as the result of the first iteration (as is the result of each later iteration).

*End of 2<sup>nd</sup> iteration*

After the next iteration, cluster C4 loses two members to C3 and C1 loses one member to C3. When the rate parameters are re-evaluated at the end of this iteration, we get:

C1: {rate = 6, weighting = 10, [7, 5, 6, 7, 5, 6, 7, 8, 6, 7], NO}
C2: {rate = 29, weighting = 2, [35, 23], O}
C3: {rate = 13, weighting = 9, [12, 12, 14, 7, 12, 10, 13, 13, 14], NO}
C4: {rate = 18, weighting = 2, [21, 15], NO}

*End of 35<sup>th</sup> iteration*

It will be appreciated that on subsequent iterations the data element [15] in C4 may be "attracted" to C3 given the disparity in weightings, and if this happens then the sole-member cluster C4 [21] would be eliminated in the next iteration. The [21] value could be attracted to C2, C4 or to a new non-outlier cluster. After 35 iterations, the cluster profile might be:

C1: {rate = 8, weighting = 10, [7, 5, 7, 5, 6, 7, 8, 6, 7, 7], NO}
C2: {rate = 26, weighting = 2, [35, 23, 21], O}
C3: {rate = 13, weighting = 9, [12, 12, 14, 12, 10, 13, 13, 14, 15], NO}
C4: {rate = 5, weighting = 1, [6], NO}

The appearance of C4 as a new non-outlier cluster in this iteration is a fluke which occurs since there is a probabilistic assignment of the data item 6 to either C1 or a new cluster. While C1 is overwhelmingly more likely, the new cluster will happen occasionally. However, it is not likely to reappear on the next iteration. Any element can generate a new cluster on any iteration. It may be that over 2,000 iteration run the iterations show a fluctuation between a four cluster pattern occurring about e.g. 25% of the time with the clusters averaged on rate parameters of e.g. 6, 12, 16 and 27, and a three cluster pattern occurring about e.g. 70% of the time with the clusters averaged on rate parameters of e.g. 7, 13 and 26. The final 5% of the time there are 2, 5 or a higher number of clusters.

*End of all iterations*

At the end of all iterations the mode of the number of clusters is taken (3) and these are interpreted as two non-outliers with rate parameters of 7 and 13, and one outlier cluster with a rate parameter of 26.

Future data points can be fitted to this mixture and assigned to whichever cluster shows the maximum probability density. Data points which fall into the outlier cluster may trigger an alert in an automated system.

EVALUATION

The performance of the presented outlier detection technique is now evaluated rigorously using synthetic and real world datasets. We first compared the effectiveness of our outlier detection technique against an appropriate version of MMPP based technique in identifying outliers and outlier probabilities for synthetic datasets. Then, we evaluated the performance in identifying real world events using the buildings event dataset mentioned in A. Ihler et al., "Adaptive event detection with time-varying poisson processes," Proceedings of the 12th ACM SIGKDD International Conference on Knowledge Discovery and Data Mining. Philadelphia, PA, USA: ACM, 2006, pp. 207-216. Results show that the proposed technique is more accurate and does not require manual tuning of parameters as opposed to MMPP baseline.

Synthetic datasets

We have considered four types of Poisson mixture data varying in the number of mixture components or clusters and dispersion. These have the typical distribution that time series data generated by periodic human activities have, as described in Ihler et al. (supra) and A. Pozdnoukhov and C. Kaiser, "Space-time dynamics of topics in streaming text," Proceedings of the 3rd ACM SIGSPATIAL International Workshop on Location-Based Social Networks. Chicago, Illinois: ACM, 2011, pp. 1-8.

We have used variance to mean ratio or dispersion index $D = \sigma^2/\mu$ to measure the dispersion in data. Statistical description of the datasets is as follows:

1) dataset 1 - Data with multiple clusters and large dispersion: Data from a Poisson mixture of 5 components with rate parameters (10,30,130,320,520) and mixture weights of (0.2,0.2,0.25,0.15,0.2).

2) dataset 2 - Data with multiple clusters and small dispersion: Data from a Poisson mixture of 5 components with mixture weights (0.13,0.18,0.2,0.24,0.25) with rate parameters (10,22,35,58,80).

3) dataset 3 - Data with two clusters and large dispersion: dataset contains two distinct Poisson mixture components. The mixture weights are (0.75,0.25) with the rate parameters (30,130).

4) dataset 4 - Data with two clusters and small dispersion: dataset has been generated from a mixture of two Poisson distributions with rate parameters (30,60) and mixture weights (0.75,0.25).

We have run our algorithm and obtained outlier probability for the datasets and outlier labels for each datum. We have used the uninformative priors for Beta distribution as ($a = 1$, $b = 1$). These values ensure that the algorithm has weak and uniform prior information regarding outlier probability. In case there is strong prior information about outlier probability, that information can be incorporated by appropriately altering the values of a and b. Since the number of clusters formed is sensitive to $\alpha$ [M. D Escobar and M. West, "Bayesian density estimation and inference using mixtures", Journal of the American Statistical Association, vol. 90, no. 430, pp. 577-588, 1995], we have used a weak informative prior value of $\alpha = 0.01$.

We experimented with various types of data using the presented version of Gibbs sampler algorithm. The sampler converges within the first few tens of iterations for datasets with large dispersion. In contrast, the sampler converged within first few hundred iterations for datasets with small dispersion. So, we have run the algorithm to generate 2000 samples of random variables for each dataset. We have used a burn-in period of 400 iterations and discarded those samples and obtained i.i.d. samples at a lag of 10 iterations to obtain posterior predictive density of data and posterior outlier probability. The posterior predictive density is defined as:

$$Pr(\widetilde{x}|\mathbf{x}, \alpha) = \sum_{\theta} Pr(\widetilde{x}|\theta)Pr(\theta|\mathbf{x}, \alpha)$$

Eq. 12

Here, $\widetilde{x}$ is the data element for which density is to be predicted using the observed data x, hyper-parameters $\alpha$ and parameters $\theta$. We use the samples of the parameters $\theta'_k$, $\theta_k$ and mixture weight samples to compute posterior predictive density of the data. The posterior outlier probability at any iteration $t$ is calculated with

$$F(p) \sim Beta(a + n'_t, b + n_t)$$

Eq. 13

Here $n'_t$ is the number of data items assigned to clusters marked as outlier clusters and $n_t$ is the number of data item assigned to clusters marked as non-outlier clusters. At every iteration of the algorithm, we compute the posterior mean of the outlier probability which is the considered the outlier probability of the entire dataset for that iteration.

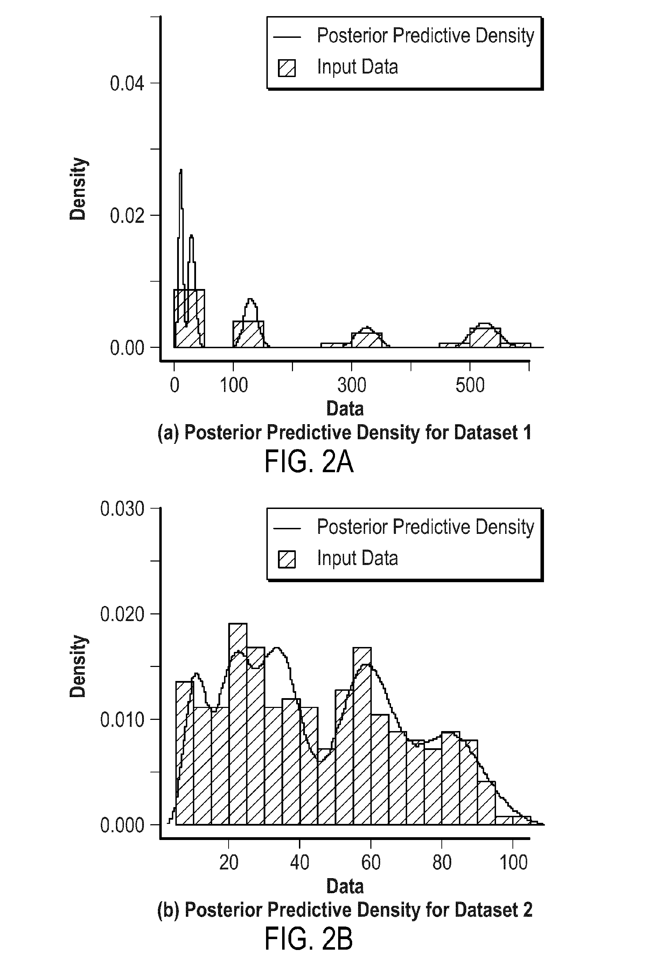

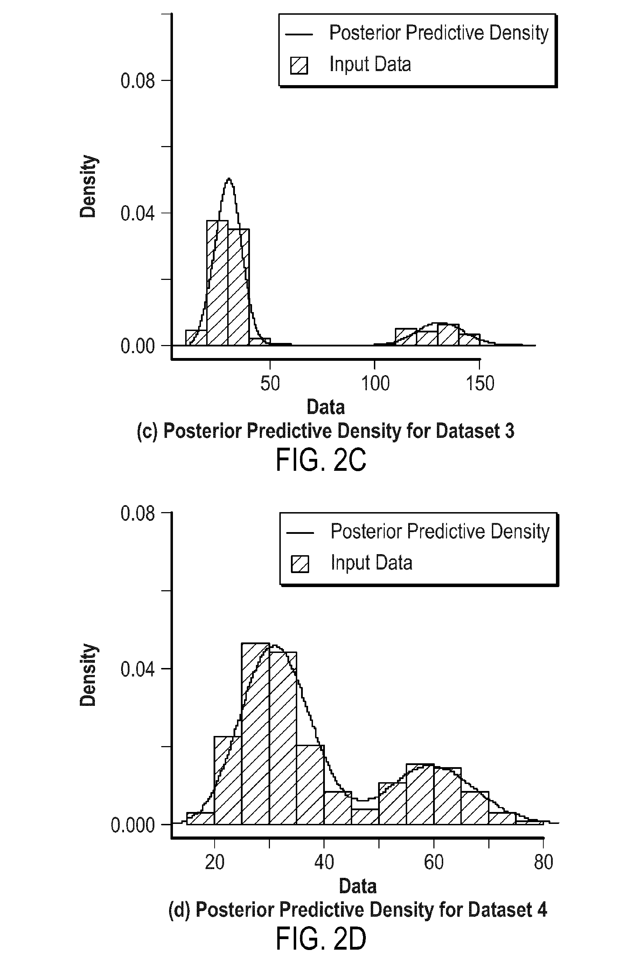

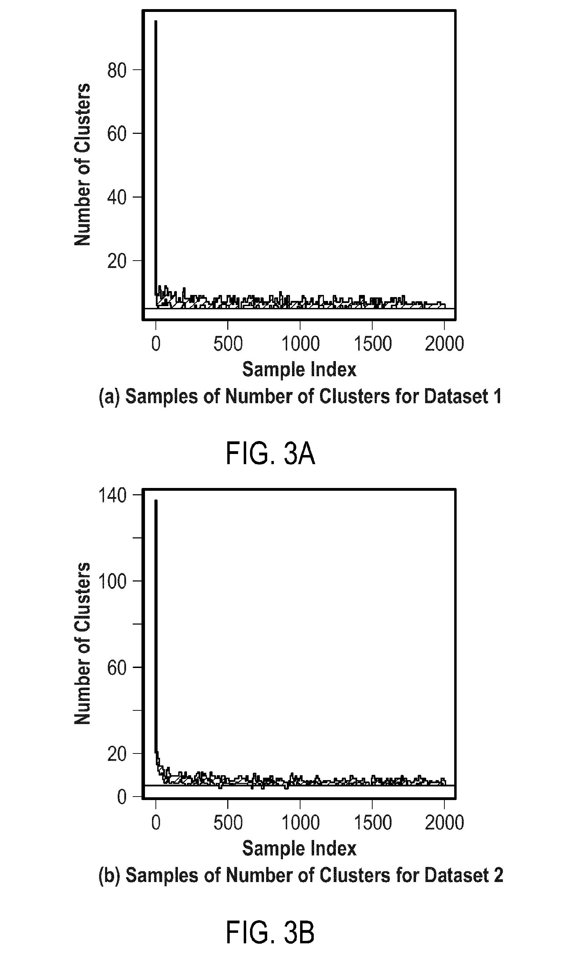

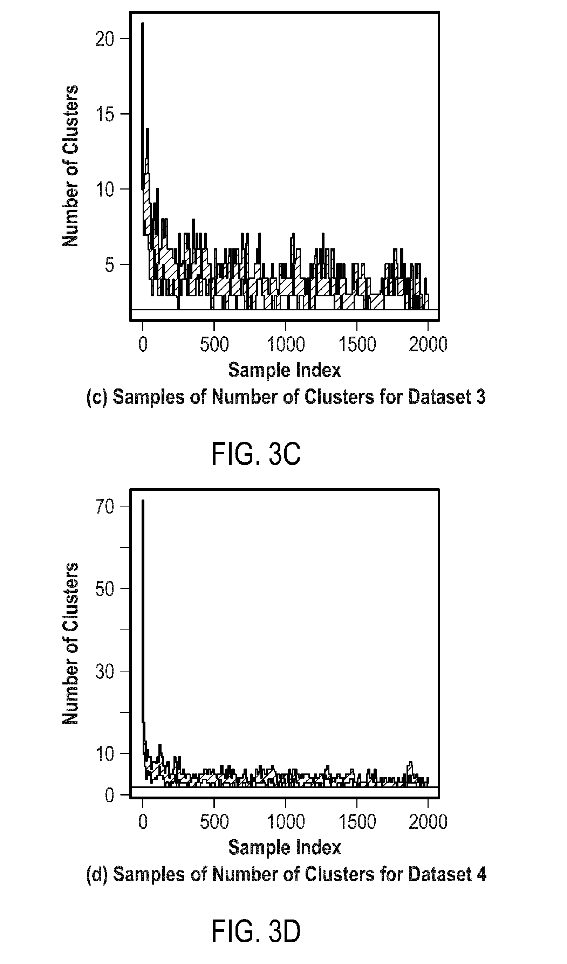

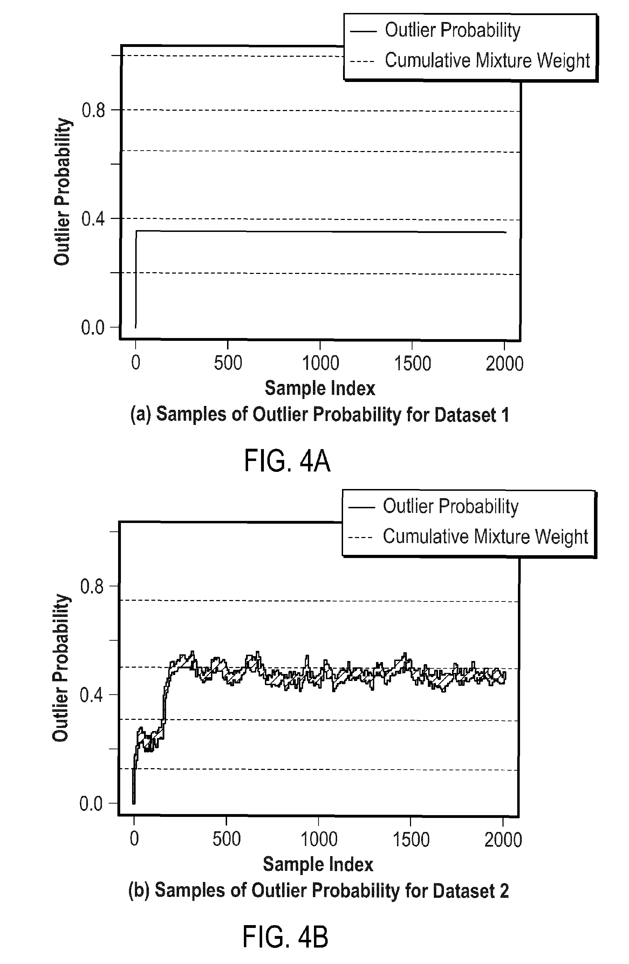

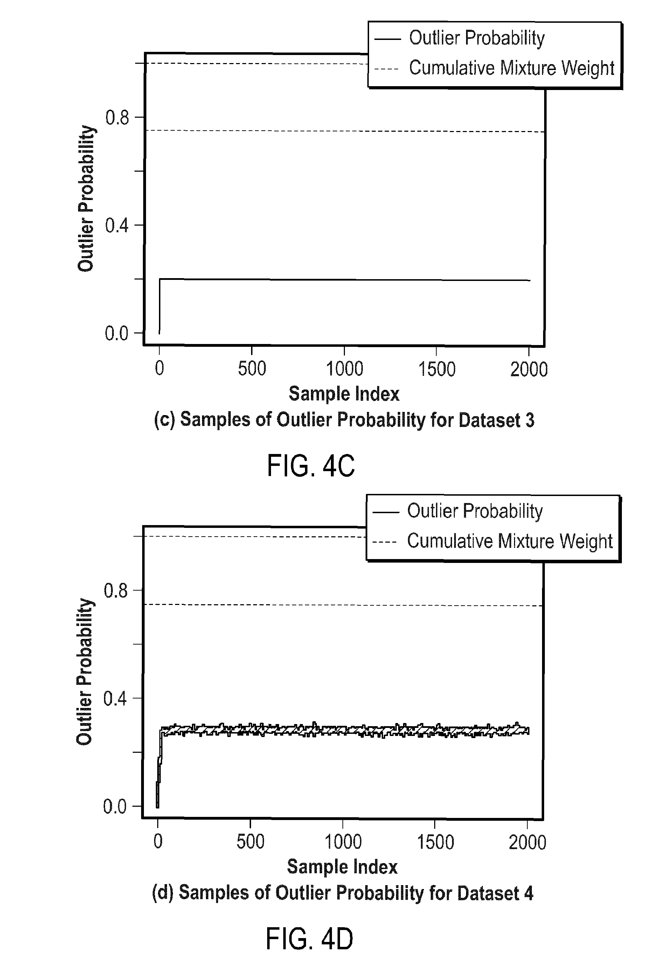

The results of running Algorithm 1 are shown in Figures 2-4. Figure 2 shows the posterior predictive density that is derived for each of the datasets from the samples of Gibbs sampler. Figure 3 shows the number of clusters formed for each dataset over the samples. We show the posterior mean of outlier probability for each of the datasets in Figure 4. Here, the horizontal lines show the cumulative mixture weights of the mixture components sorted by their Poisson rate parameter. The algorithm identifies appropriate number of clusters in the dataset within first few iterations as seen in Figure 3.

In order to compare the performance of our algorithm, we have used MMPP model discussed in Ihler et al., which identifies real world events based on outliers. This model considers that any count value in a periodic count dataset can be described as:

$$N(t) = N_0(t) + N_E(t)$$

Eq. 14

where $N_0(t)$ represents counts due to periodic activity. $N_E(t)$ represents any additional counts that are due to an event and hence represent an outlier.

The counts observed due to periodic activities are assumed to follow a Poisson distribution with rate parameter $\lambda(t)$ dependent on time. In order to account for the effect of day and hour on the periodic counts, the time dependent rate parameter is calculated as $\lambda(t) = \lambda_0 \, \delta_{d(t)} \, \varphi_{d(t),h(t)}$. Here $\delta_{d(t)}$ controls the day effect and $\varphi_{d(t),h(t)}$ controls the hour effect for a day.

The presence of an event results in increased counts in addition to periodic counts which is captured in $z(t)$ and $N_E(t)$ defined as

$$N_E(t) = \begin{cases} 0, & \text{if } z(t) = 0 \\ P(N, \gamma(t)), & \text{if } z(t) = 1 \end{cases}$$

Eq. 15

Here z(t) is controlled by Markovian transition probability matrix defined as

$$\begin{pmatrix} 1 - z_0 & z_1 \\ z_0 & 1 - z_1 \end{pmatrix}$$

Eq. 16

and $z_0$ and $z_1$ have prior distributions and their values determine the number of events detected by the system as outliers with increased count values. The model also contains other appropriate prior distributions and hyper-parameters needed for the Bayesian inference. We have obtained MCMC samples through Gibbs sampling of the random variables described above. The posterior mode of $z(t)$ in the samples for any count value determines whether that count value is an outlier and likely represents an event. The posterior mean computed with z(t) for all the data can be used to detect outlier probability at each sample. We use this outlier probability to analyse the effectiveness of above described technique.

In Table I, we summarize the cumulative mixture weights and outlier probabilities inferred by both algorithms to analyse their effectiveness. In order to analyse the performance of the algorithm in detecting outlier probabilities, consider dataset 3 which has two distinct clusters. Mixture weights for the clusters are (0.75,0.25) with Poisson rate parameters (30,130) respectively. Data items belonging to the second cluster represent outliers with high count values.

Table I: Comparison of outlier probabilities inferred by the models

| dataset | Cumulative Mixture Weights | Presented Model | MMPP model |
|---|---|---|---|
| 1 | (0.2, 0.4, **0.65,** 0.8,1) | **0.35** | 0.57 |
| 2 | (0.13, 0.31, **0.51**, 0.75, 1) | **0.48** | 0.62 |
| 3 | (0.75, **1.0**) | **0.22** | **0.24** |
| 4 | (0.75, **1.0**) | **0.28** | 0.38 |

Thus, it can be seen that the underlined values in the third column provide an outlier probability that matches well with the top-end mixture weights, unlike the MMPP model (other than for data set 3).

In Figure 4c, it is shown that the algorithm appropriately identifies the mixture weight of the second cluster as proportion of outliers. In dataset 2, there is very low dispersion in spite of generating the data from 5 distinct clusters. We can see that the algorithm identifies the combined weights of last three clusters as outlier probability.

In Figure 4, the four plots show that the algorithm identifies sum of the mixture weights of high value rate parameter clusters, as outlier probability. This approach to finding outliers is more informative as outliers are categorized with different rate parameters and the proportion of each category of outliers can be known. Since we assign each datum to a single cluster where it has the maximum density, all the data items in a given cluster are either marked as outliers or non-outliers. Also, any prior information regarding outlier probability for the dataset can be easily incorporated using suitable Beta prior distribution.

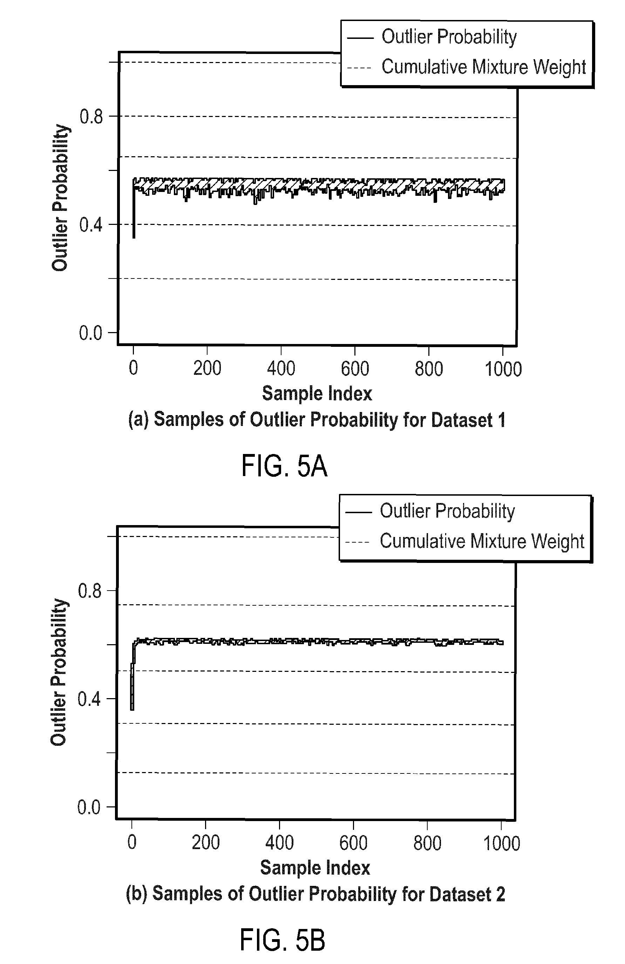

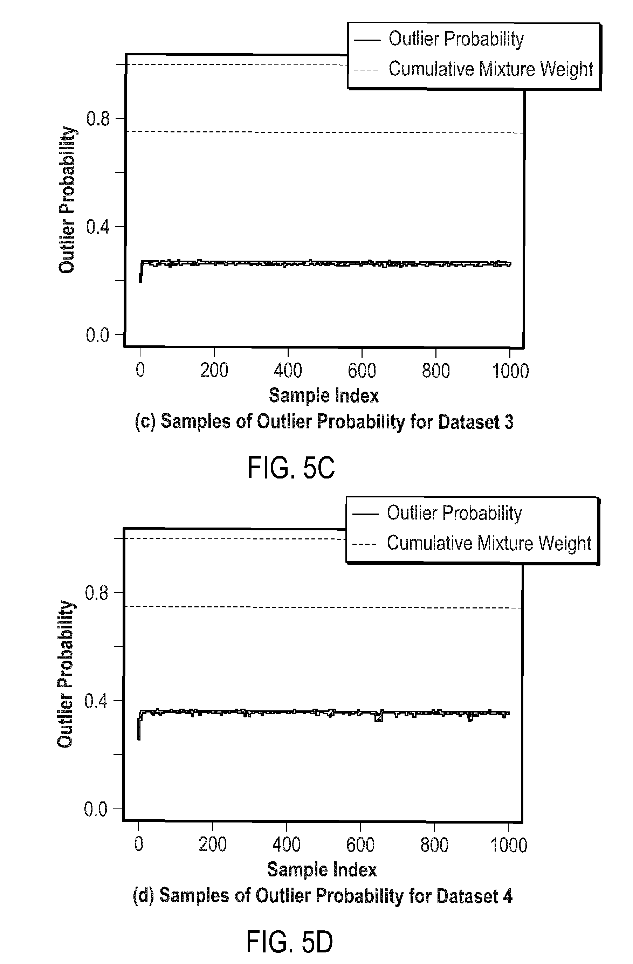

In Figure 5, we show the outlier probabilities derived for synthetic datasets. Here the horizontal lines show the cumulative mixture weights of mixture components sorted by their Poisson rate parameter. The third row of Table I shows that both models identify mixture weight of the cluster with large Poisson parameter as outlier probability for dataset 3. We can see these inferences in Figures 4c and 5c. Note that dataset 3 has a huge dispersion with clear bimodality. Since MMPP based model specifically distinguishes between normal and outlier dataset with its parameters, it successfully infers about the proportion of outlier data. However, in Figures 5a, 5b and 5d, we can see that MMPP based algorithm fails to identify the outlier probabilities correctly for datasets 1, 2 and 4. For each of these datasets, it labels some of the data belonging to a cluster as outliers and the remaining in the same cluster as non-outliers. For example, consider the posterior mean of the outlier probabilities identified by the algorithm for dataset 2 is 0.62. This implies that the algorithm identifies some of the data points belonging to cluster with rate parameter 35 as outliers and rest of the data of same cluster as non-outliers. Similarly, the algorithm infers that the outlier probability for dataset 4 is 0.38 which implies that 13% of the data belonging to non-outlier cluster with rate parameter 30 are misclassified as outliers. These results clearly show that MMPP based outlier detection is not effective for datasets which have no strong bimodality.

On the other hand, the proposed model correctly identifies outlier probabilities based on mixture weights of different clusters in datasets as seen in Table I. For example, in the first row, we can see that inferred outlier probability is 0.35 for the first dataset. This means that our model identifies the sum of mixture of weights of last two clusters as outlier probability. So, it infers that last two clusters are outlier clusters and data belonging to them are outliers. This also lets us make probabilistic queries about outliers belonging to outlier clusters. Similar observations can be made for the remaining datasets as shown in the table. We now explain the advantages of our technique in detecting real world events against MMPP based event detection technique.

*B. Buildings dataset*

Now, we analyse the performance of our algorithm in detecting events using human generated periodic count data.

We have used *buildings* dataset mentioned in Ihler et al. which consists of count data of people's movements recorded every 30 minutes at the Calit2 institute building in the University of California, Irvine campus for a duration of 3 months. The data was recorded by optical detectors which count the number of people entering and exiting the building. Additionally, there are details of *events* that took place in the building. The time series data is effected by events which are aperiodic activities held in the building. There were 89 hours during which events have taken place in the building. Note that all the hours during which events have occurred might not have increased counts of people moving in the building. Few events in the building were unscheduled or unofficial and hence were not recorded. Some of these events can be directly seen as increased count values which are *outliers* in the time series data. We have used the time series data of hourly counts of people entering the building and real world events in the building to evaluate the two models. Detecting outliers in such data to infer about any real world events is challenging.

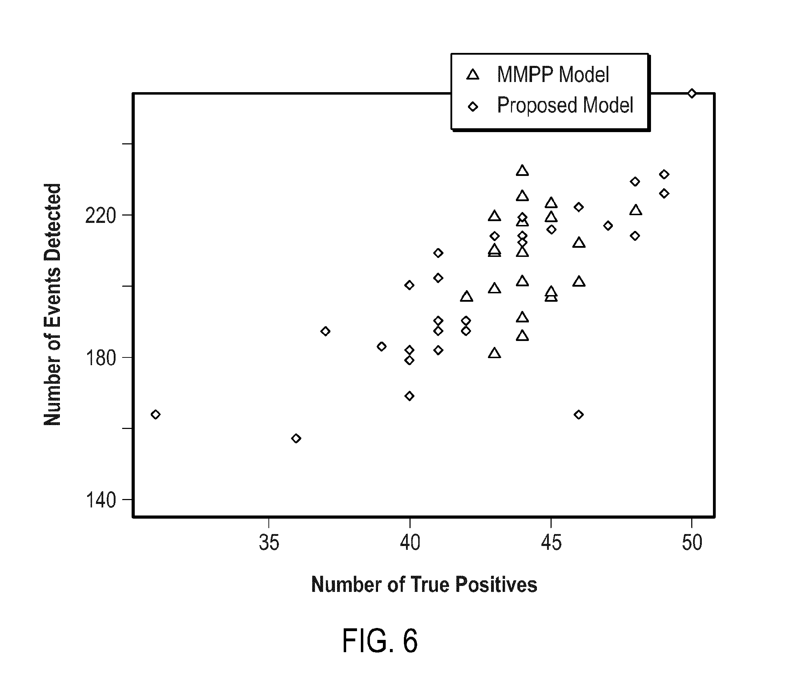

We have run our algorithm on count datasets corresponding to each hour of a day and detected outliers. We have used outliers to detect hours during which events were held in the building. We inferred Poisson rate parameters of mixture components for hourly dataset. So, the various *rates* at which people arrive at any given hour and unusual rates among them are known. For example, five different rates at which people arrive in the building at any hour shows the variability in the arrival rates. If two rate parameters represent outlier clusters, then count values belonging to these two clusters potentially represent events in the building. In order to analyse the performance of the MMPP based event detection technique, we set up the transition probability matrix over z(t) with 30 sets of random weights to detect the same number of event hours as detected by our model. The performance of both the techniques are shown in Figure 6. Our technique had a true positive rate of 28% whereas the average true positive rate for the MMPP model was 21%.

Another advantage of our technique is that the user need not have any prior knowledge about what constitutes an event. In contrast, such information is required in order to detect events using MMPP model as different weights on the transition probability matrix over z(t) detect different number of events.

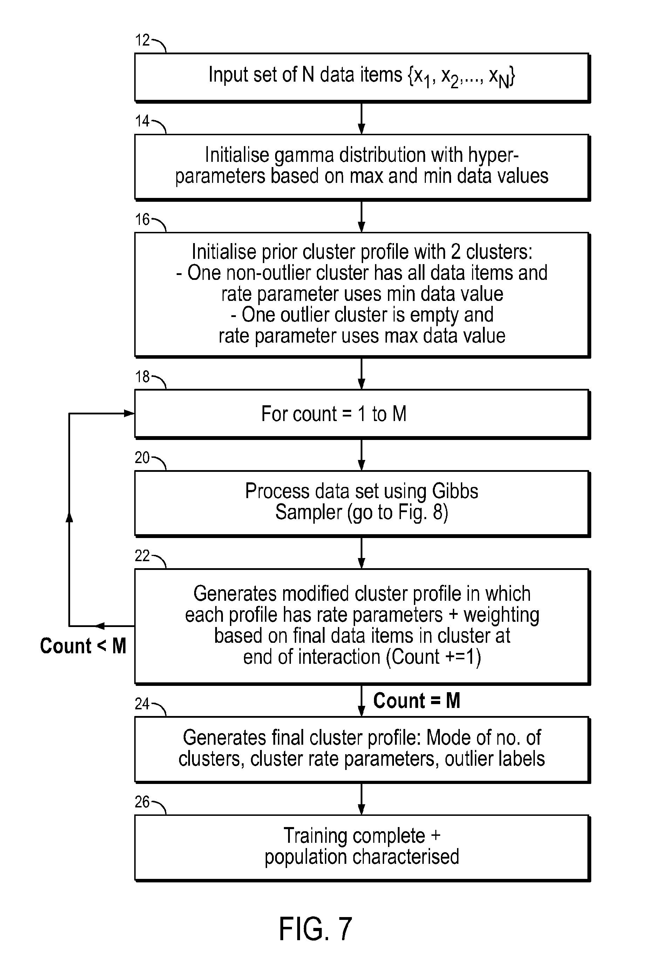

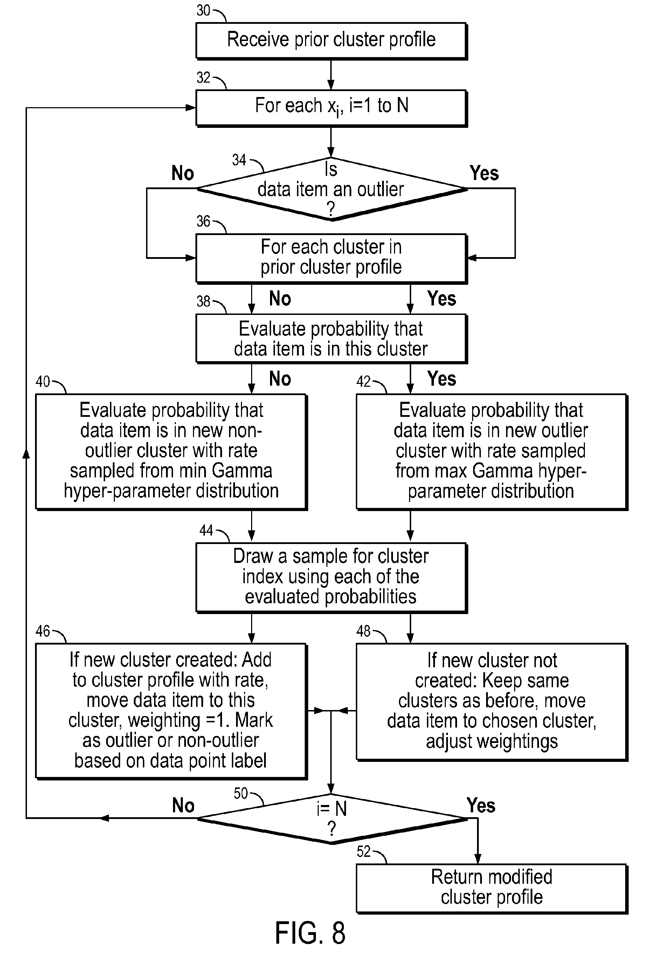

The invention can suitably be implemented using a computer programmed to perform the claimed method. Figs. 7 and 8 show flowcharts detailing the operation of such a computer program, with Fig. 7 implementing the overall process (initialization, looping of the modified Gibbs algorithm, and final steps) and Fig. 8 showing the programming of the Gibbs algorithm itself.

In Fig. 7, a set of N data items are received for processing, step 12. These items will typically be a historical data set for a system to be monitored, the historical data set being used as training data to characterize the data population with an output for use in an automated monitoring system.

A Gamma distribution is initialized with hyper-parameters based on maximum and minimum data values for the data set, step 14. In step 16, two clusters are initialised, one being a non-outlier with all data items assigned to it, and the other being an outlier which in this embodiment is empty. (These choices can be varied if there is prior knowledge of the data characteristics, so that for example a non-empty outlier cluster could be initialised.)

Step 18 begins a loop through M iterations. M is chosen to be sufficient to converge towards a stable cluster profile. For data sets described above, several hundred or a few thousand iterations have been used, but again this is at the choice of the system designer or the person configuring the software. In each iteration, step 20, the full data set is processed using the modified Gibbs sampler which is described now with reference to Fig. 8.

In Fig. 8, the program receives a prior cluster profile, step 30. On the first iteration this is the initialised clusters, but in later iterations, the output of the preceding iteration will be the input to step 30. Although not explicitly shown in Fig. 30, it is preferred that any single-member clusters are removed at the start of each iteration, to encourage the formation of a reasonable number of clusters. The empty outlier cluster is retained, however.

A loop is created through the data set of N items, step 32. For each item, step 34, an evaluation is made whether the data item is an outlier (see line 14 of the Algorithm 1 for one example of how this can be evaluated). The data item is marked as being non-outlier ("No") or outlier ("Yes"), and in each case the process proceeds to steps 36 and 38 where a probability density is evaluated for each cluster existing in the cluster profile, to determine a likelihood that the data item being processed belongs to that cluster. These probability metrics are stored for each cluster. See line 15 of the Algorithm for one such evaluation equation.

Then if the data item is not an outlier, the process moves to step 40, where a probability is evaluated that the data item is in a new cluster. Line 17 of the Algorithm provides one example of how this might be evaluated, and it can be seen that this is based on the hyper-parameter λ. Specifically, and more accurately than is expressed in the limited space of the flowchart text, we evaluate the probability that the data item is in a new non outlier cluster with a probability distribution whose parameters are sampled from a base distribution with hyper-parameters set for representing non outlier clusters.

Alternatively if the data item is flagged as a likely outlier, the process instead moves to step 42, where the corresponding probability of the data item being in a new outlier cluster is evaluated (see Line 16 of the Algorithm). Thus, again more accurately than is expressed in the limited space of the flowchart text, we evaluate the probability that the data item is in a new outlier cluster with a probability distribution whose parameters are sampled from a base distribution with hyper-parameters set for representing outlier clusters.

It will be appreciated that this branching of the process is what gives rise to two infinite mixture models. New clusters can be generated according to two different parameter sets depending on whether a non-outlier cluster is called for or an outlier cluster is called for. The resultant final cluster profile can have a mix of clusters from both generative techniques.

Having evaluated the probabilities a sample is drawn, step 44, and the data item is assigned probabilistically to one of the existing cluster or to a new cluster. This does not mean assigning the data item to cluster with highest probability, but rather statistically assigning it to a cluster based on the probability densities, so that sometimes a data item will be assigned to a relatively unlikely cluster.

If as a result of this assignment a new cluster was created, step 46, then this new cluster is added to the cluster profile with sampled probability distribution parameters, with a single data item member and a corresponding weighting.

The cluster is marked as outlier or non-outlier depending on the label of its first data item member. If no new cluster is created, step 48, i.e. the data item is assigned to an existing cluster in step 44, then the cluster profile is maintained as before with the only changes being the possible reassignment of the data item and any resultant rebalancing of weightings.

If all data items are not yet processed on this iteration, decision 50, then the process returns to step 32. Otherwise, the modified cluster profile is returned, step 52, and the process reverts to Fig. 7.

Reverting to Fig. 7, the output of the Gibbs sampler of Fig. 8 is returned, and then in step 22 the cluster profile returned is used to generate a modified version of the cluster profile in which the final data items in the cluster at the end of the Gibbs sampler iteration are used to refresh the probability distribution parameters (in this case, rate parameters as we are dealing with a Poisson model). The count is incremented, and the process returns to step 18 for a further iteration if the count is less than M.

As the process is repeated, the cluster profile is iteratively modified on each pass through the Gibbs sampler, and the system stores the output of step 22 for each iteration.

When all iterations are complete, a final cluster profile (or data model) is generated in step 24, which characterises the population of data items into clusters identified as outliers or non-outliers, where each cluster has its own probability distribution parameters. The final cluster profile, as previously described, is based on the mode number of clusters over all iterations.

After the creation of this data model, the training is complete and the data set has been characterised, step 26.

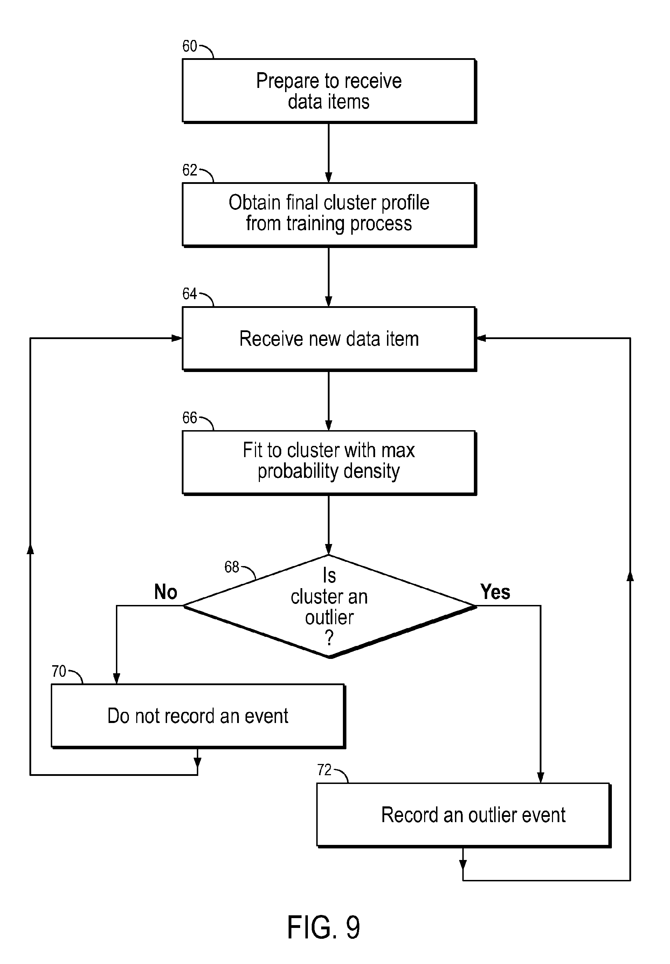

Fig. 9 shows a flowchart of how the data model is used for the detection of anomalous signals in an unsupervised manner. In step 60 the system prepares to receive data items. The data items will typically be representative of real world sensor data and can be of any type, i.e. discrete, continuous, multivariate, etc. The data should however have the same characteristics as a data set used in training a data model or final cluster profile according to Figs. 7 and 8, which cluster profile is received and stored in step 62.

In step 64, a new data item is received. In step 66, this data item is fitted to the cluster profile using any appropriate statistical technique, such as evaluating the probability density associated with each cluster for the data item's value(s) and determining the cluster with the highest probability density.

In step 68, a determination is made whether the cluster is an outlier or not, according to the cluster labels or identifiers received as part of the cluster profile in step 62 (those labels resulting directly from the process of Figs. 7 and 8). If not, then in this embodiment no event is recorded, step 70, though the data item may be stored for use in a further training data set. If the cluster to which the data item is best fitted is an outlier cluster, then an outlier event is recorded, step 70. This can cause any suitable action to be taken. Typically there will be an output event signal generated to an interface by the computing system which implements the process of Fig. 9 and that signal can trigger any desired action in a connected system or piece of equipment (e.g. sounding an alarm, shutting off a valve, alerting authorities, activating a sprinkler system, causing a traffic light control system to change from "light traffic" mode to "heavy traffic" mode, and so on and so forth, depending on the application).

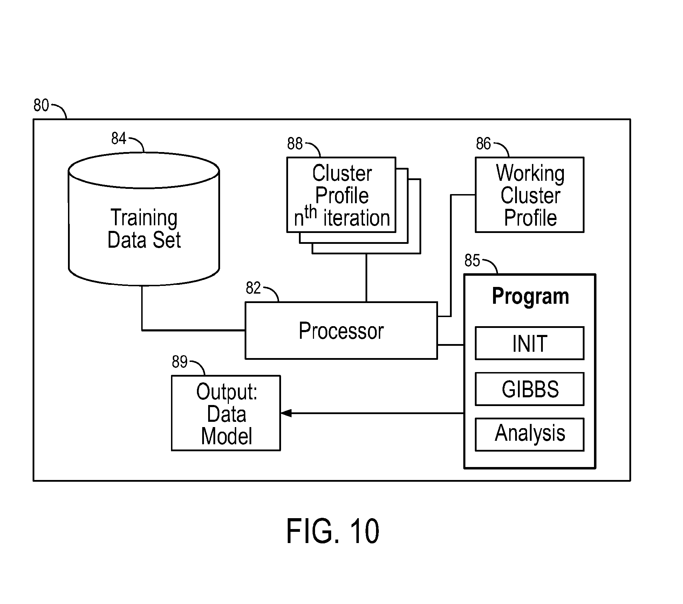

In Fig. 10 there is indicated, generally at 80, a system for characterising a data set and detecting outliers, comprising a processor 82 which is in communication with a database 84 containing a training data set. The processor has stored in a memory 85 a program as described in relation to Figs. 7 and 8 having an initialisation section (Fig. 7, steps 12-16), a Gibbs sampler routine (Fig. 7, steps 18-22 and Fig. 8), and an analysis section (Fig. 7, steps 24 and 26).

The program processes the data set as previously described, maintaining a working cluster profile 86 which is iteratively modified on each iteration of the Gibbs sampler, and in storage, a set of cluster profiles 88 which are updated with the results of each iteration for use in the final analysis (steps 24-26, Fig. 7).

The program writes to storage an output 89 which is the data model characterising the training data set as a set of non-outlier and outlier clusters each having rate parameters, etc. As previously described.

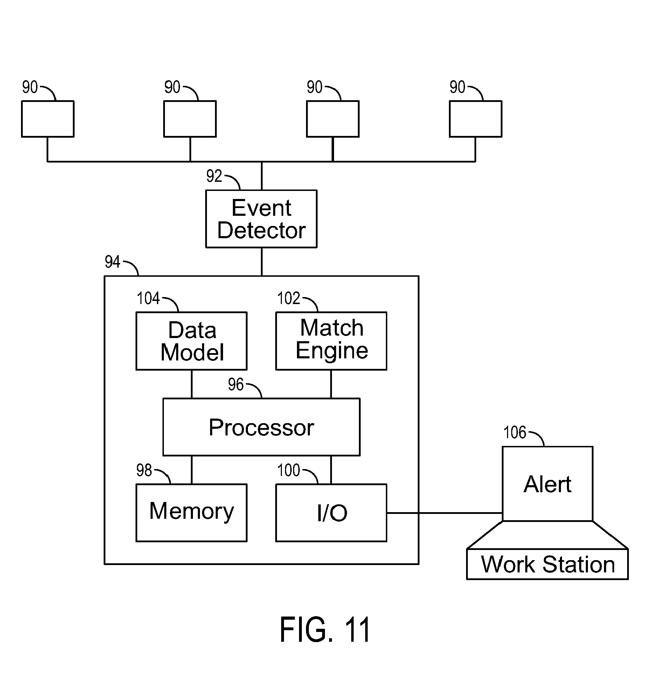

Fig. 11 shows a system according to the invention which comprises a plurality of sensors 90 in communication with an event detector 92. The event detector receives sensor signals and buffers them into batches which are sent to a monitoring unit 94 periodically.

The monitoring unit 94 is a computer system with a processor 96, working memory 98 and input/output components 100. The skilled person will appreciate that this may be implemented in a general purpose computer system having other conventional components. The system is programmed with a match engine 102 and stores a data model 104 which was generated as the output of a system such as that of Fig. 10. It will be appreciated that the system of Fig. 10 can equally be implemented using the same computing system as the monitoring unit or in a different computing system.

The match engine 102 is a program which uses appropriate and conventional statistical techniques to find a best fit between a data item received as a signal from the event detector 92, and the data model 104. The data items provided by the event detector 92 represent the output of one or more of the sensors 90. In an exemplary application, the data items are time series data representing real time or recent historical signals detected by the sensors 90, and the match engine 102 finds a maximum probability density for each data item within the data model 104. If the cluster of the data model for which a match is indicated is labelled as an outlier cluster, then appropriate action can be taken such as logging an event, or issuing an output alert signal. In Fig. 11, the output alert signal is sent to a workstation 106.

It will be appreciated that the output alert signal can trigger any desired action, either by informing a human user of the workstation, or by triggering an automated response in a connected system (not shown) that can take remedial action appropriate to the event which is indicated by the detection of outlier data.

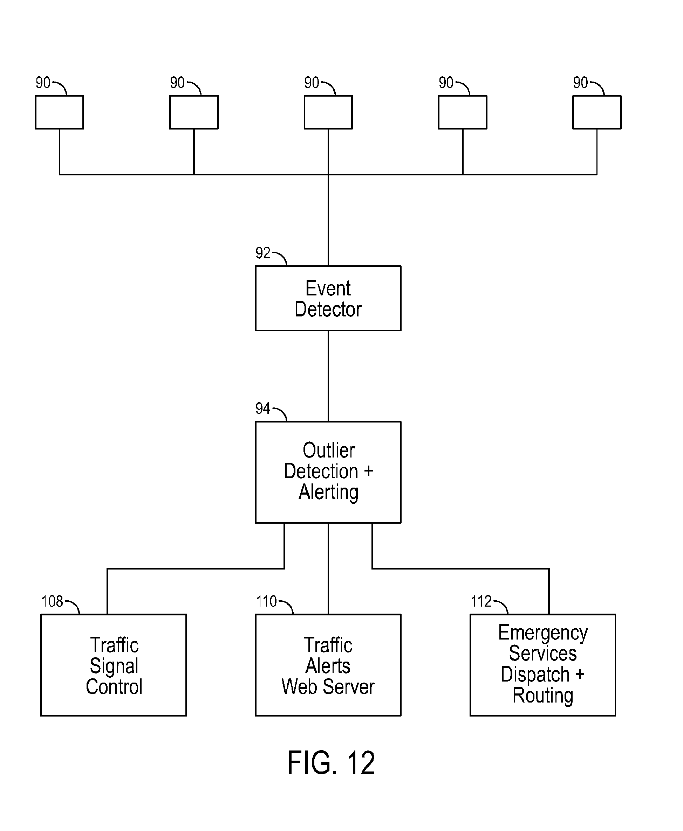

Fig. 12 shows a specific embodiment of the Fig. 11 system architecture with a plurality of sensors 90 communicating with the event detector 92. The sensors are traffic sensors situated at known locations in a city. The monitoring unit 94 (labelled here as "outlier detection and reporting") is supplied with and stores a data model which was generated by the system of Fig. 10 in accordance with the flowcharts of Figs. 7 and 8 and the teachings herein. The data model was generated from a historical data set obtained from the sensors 90 where each sensor detects the passage of a vehicle, and where the individual vehicle passages are grouped in five-minute intervals by time of day. The training data set captured an appropriate number of data points to allow the traffic patterns to be properly characterised, such as several months of data. At the choice of the system designer, the data can be organised differently or according to additional factors, such as with reference to day of the week or month of the year for instance (since traffic may show different patterns on a Saturday morning than a Tuesday morning, and may be very different during school vacation time than when schools are in session).

As described above in relation to Fig. 11, the monitoring unit fits data representative of sensor signals to a data model and if a data item is fitted to a cluster labelled as an outlier, an appropriate output signal can be generated. Three output interfaces are shown in Fig. 12, namely an output to a traffic signal control interface 108, an output to a web server 110 which provides traffic warnings on a web page (and could also issue notifications to social networks such as a Twitter or Facebook account), and an output to an emergency services dispatch and routing facility 112, which might for example allow traffic police to be dispatched in an automated fashion when unusually heavy traffic levels occur in a particular district.

Where Poisson rate parameters are sampled from conjugate Gamma distribution for simplicity, the methods described herein are equally applicable to data which are of different kinds and which might be generated by Gaussian or other generative models. To give just one example, instead of count data for traffic, the invention could be implemented in a medical system receiving continuous sensor data for 02 levels in blood, or heart rate sensor data. Instead of simply having an alarm triggered at a set point as often occurs in conventional techniques, the continuous data could be sampled or averaged at intervals and a time series of such data used to derive a cluster profile according to a Gaussian model with distribution parameters mean and standard deviation sampled from base distributions with appropriate hyper parameters. Further the model can also be applied to data sets that are not time series data and obtain cluster profiles for useful actions.

In summary, a computer-implemented method is presented of processing a data set to detect clusters of outlier data, and of using the processed data to automatically detect outlier events based on sensor data and to issue alerts when such events are detected. The outlier detection technique employs two infinite model mixtures, one tailored to detection of non-outlier data, and the other tailored to detection of outlier data. Clusters of data are created and labelled as non-outlier or outlier clusters according to which infinite mixture model generated the clusters.

### Claims

1.    A computer-implemented method of processing a data set to detect clusters of outlier data, comprising the steps of:

  a) receiving as an input a data set of N data points;
  b) iterating through the entire data set a plurality of times, wherein each iteration comprises:

    (i) inferring a prior cluster profile having one or more clusters, each of which is identified as a non-outlier cluster or an outlier cluster, and each of which is **characterised by** its own probability distribution parameters, and by a weighting based on the relative number of data points assigned to the cluster, the prior cluster profile being inferred according to the output of the preceding iteration or, on the first iteration, according to an initial inferred cluster profile;
    ii) for each data point in the data set:

      (aa) evaluating the probabilities that the data point belongs to each of the existing clusters in the prior cluster profile and that it belongs to a new cluster identified as a non-outlier cluster or an outlier cluster;
      (bb) assigning the data point to one of the existing clusters or a new cluster in a probabilistic fashion according to the evaluated probabilities in (aa);

    iii) updating the prior cluster profile to reflect the assignment of the data points to existing or new clusters and returning the number of clusters, the identification of each cluster as outlier or non-outlier, and the probability distribution parameters and weightings for each cluster, for use as a prior cluster profile in the next iteration;

c) after a predetermined number of iterations through the entire data set, computing the most likely number of clusters in the data set according to all iterations in order to label data items and clusters as non-outliers and outliers along with determining the parameters for the cluster.

2.  The method of claim 1, wherein the initial inferred cluster profile is generated by:

i) initialising a non-outlier cluster having first probability distribution parameters and a weighting indicating the relative number of data points assigned to the non-outlier cluster; and optionally
ii) initialising an outlier cluster having second probability distribution parameters and a weighting indicating the relative number of data points assigned to the outlier cluster.

3.  The method of claim 2, wherein all data points are initially assigned to the non-outlier cluster.

4.  The method of any preceding claim, wherein for each point in the data set, the data point is identified as being a non-outlier data point or an outlier data point.

5.  The method of claim 4, wherein if the data point is identified as a non-outlier data point, then in step (aa) the probability is evaluated that it belongs to a new cluster identified as a non-outlier cluster, using a probability distribution function typical of non-outlier data, whereas if the data point is identified as an outlier data point, then in step (aa) the probability is evaluated that it belongs to a new cluster identified as an outlier cluster, using a distribution function typical of outlier data.

6.  The method of any preceding claim, wherein the evaluation of probabilities in step (aa) comprises evaluating the probability that the data point would be generated by the probability distribution parameters of each such cluster, modified by the weighting based on the relative number of data points assigned to the cluster.

7.  The method of any preceding claim, wherein step (bb) of assigning the data point to an existing cluster or a new cluster comprises, where the data point is assigned to a different cluster than it had previously been assigned to, removing the data point from the previous cluster and adding the data point to the new cluster, and updating the weightings accordingly.

8.  The method of claim 7, wherein if the data point is assigned to a new cluster, adding said new cluster to the cluster profile and assigning it a weighting for a cluster with a single member.

9.  The method of any preceding claim, further comprising the step of, on each iteration through the data set, removing from the prior cluster profile any clusters with a single member.

10. The method of any preceding claim, wherein the probability distribution parameters are updated for each cluster in step (iii) after each iteration through the data set based on the data points assigned to each cluster at the end of that iteration.

11. The method of any preceding claim, wherein the probability distribution parameters of non-outlier clusters are **characterised by** a first hyper-parameter vector and those of outlier clusters are **characterised by** a second hyper-vector parameter.

12. The method of claim 11, wherein each cluster is **characterised by** a random variable with a posterior probability distribution.

13. The method of any preceding claim, wherein the initial inferred cluster profile is initialised as a pair of clusters whose probability distribution parameters are generated according to the minimum and maximum values in the data set, respectively and which are labelled as non-outlier and outlier clusters, respectively.

14. A method of generating an alert in a system comprising one or more sensors, the method comprising:

(i) receiving a data series representing signals from said one or more sensors;

(ii) maintaining a data model, the data model comprising a cluster profile generated by the method of any of claims 1-13, in which a plurality of clusters are identified, including at least one cluster identified as representative of non-outlier data and at least one cluster identified as representative of outlier data, each cluster having a probability distribution parameter;

(iii) calculating, for a plurality of data items in the data series, a best fit between each data item and at least one cluster in the cluster profile;

(iv) where the best fit is to a cluster identified as representative of outlier data, outputting an alert signal.

15. A system comprising one or more sensors for detecting a condition and generating a signal in response thereto, a computing system operatively connected to receive data representative of signals from said one or more sensors, and an output interface for the computing system, the computing system being programmed with instructions which when executed carry out the method of claim 14.

FIG. 1

(a) Posterior Predictive Density for Dataset 1

FIG. 2A

(b) Posterior Predictive Density for Dataset 2

FIG. 2B

(c) Posterior Predictive Density for Dataset 3

FIG. 2C

(d) Posterior Predictive Density for Dataset 4

FIG. 2D

(a) Samples of Number of Clusters for Dataset 1

FIG. 3A

(b) Samples of Number of Clusters for Dataset 2

FIG. 3B

(c) Samples of Number of Clusters for Dataset 3

FIG. 3C

(d) Samples of Number of Clusters for Dataset 4

FIG. 3D

(a) Samples of Outlier Probability for Dataset 1

FIG. 4A

(b) Samples of Outlier Probability for Dataset 2

FIG. 4B

(c) Samples of Outlier Probability for Dataset 3

FIG. 4C

(d) Samples of Outlier Probability for Dataset 4

FIG. 4D

(a) Samples of Outlier Probability for Dataset 1

FIG. 5A

(b) Samples of Outlier Probability for Dataset 2

FIG. 5B

(c) Samples of Outlier Probability for Dataset 3

FIG. 5C

(d) Samples of Outlier Probability for Dataset 4

FIG. 5D

FIG. 6

12 ⌐
Input set of N data items {$x_1$, $x_2$,..., $x_N$}

14 ⌐
Initialise gamma distribution with hyper-parameters based on max and min data values

16 ⌐
Initialise prior cluster profile with 2 clusters:
- One non-outlier cluster has all data items and rate parameter uses min data value
- One outlier cluster is empty and rate parameter uses max data value

18 ⌐
For count = 1 to M

20 ⌐
Process data set using Gibbs Sampler (go to Fig. 8)

22 ⌐
Generates modified cluster profile in which each profile has rate parameters + weighting based on final data items in cluster at end of interaction (Count +=1)

**Count < M**

**Count = M**

24 ⌐
Generates final cluster profile: Mode of no. of clusters, cluster rate parameters, outlier labels

26 ⌐
Training complete + population characterised

FIG. 7

30 — Receive prior cluster profile

32 — For each $x_i$, i=1 to N

34 — **No** ← Is data item an outlier ? → **Yes**

36 — For each cluster in prior cluster profile

38 — **No**    **Yes**

Evaluate probability that data item is in this cluster

**No**    **Yes**

40 — Evaluate probability that data item is in new non-outlier cluster with rate sampled from min Gamma hyper-parameter distribution

42 — Evaluate probability that data item is in new outlier cluster with rate sampled from max Gamma hyper-parameter distribution

44 — Draw a sample for cluster index using each of the evaluated probabilities

46 — If new cluster created: Add to cluster profile with rate, move data item to this cluster, weighting =1. Mark as outlier or non-outlier based on data point label

48 — If new cluster not created: Keep same clusters as before, move data item to chosen cluster, adjust weightings

50 — **No** ← i= N ? → **Yes**

52 — Return modified cluster profile

FIG. 8

60
Prepare to receive
data items

62
Obtain final cluster profile
from training process

64
Receive new data item

66
Fit to cluster with max
probability density

68
Is
cluster an
outlier
?

**No**

**Yes**

70
Do not record an event

72
Record an outlier event

FIG. 9

FIG. 10

90 — □    90 — □    90 — □    90 — □

92 —

Event
Detector

94 —

104 —

Data
Model

102 —

Match
Engine

96 —

Processor

98 —

Memory

100 —

I/O

106 —

Alert

Work Station

FIG. 11

FIG. 12

Europäisches
Patentamt

European
Patent Office

Office européen
des brevets

# EUROPEAN SEARCH REPORT

Application Number

EP 15 17 4186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Kenji Yamanishi, Jun-ichi Takeuchi, Graham Williams, Peter Milne: "On-Line Unsupervised Outlier Detection Using Finite Mixtures with Discounting Learning Algorithms", Data Mining and Knowledge Discovery, vol. 8, no. 3 1 May 2004 (2004-05-01), pages 275-300, XP055234482, Boston DOI: 10.1023/B:DAMI.0000023676.72185.7c Retrieved from the Internet: URL:http://rd.springer.com/content/pdf/10.1023/B:DAMI.0000023676.72185.7c.pdf [retrieved on 2015-12-09] * abstract; figures 1, 2, 4 * * page 276 - page 288 *<br>----- | 1-15 | INV. G06N7/00 |
| A | Carl Edward Rasmussen: "The Infinite Gaussian Mixture Model", Advances in Neural Information Processing Systems 12, 1 January 2000 (2000-01-01), pages 554-560, XP055235172, MIT Press Retrieved from the Internet: URL:https://www.seas.harvard.edu/courses/cs281/papers/rasmussen-1999a.pdf [retrieved on 2015-12-08] * the whole document *<br>-----<br><br>-/-- | 1-15 | TECHNICAL FIELDS SEARCHED (IPC)<br><br>G06N<br>G08G |

The present search report has been drawn up for all claims

| Place of search | Date of completion of the search | Examiner |
|---|---|---|
| The Hague | 21 December 2015 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 17 4186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | ALEXANDER IHLER, JON HUTCHINS AND PADHRAIC SMYTH: "Adaptive event detection with time-varying poisson processes", PROCEEDINGS OF THE TWELFTH ACM SIGKDD INTERNATIONAL CONFERENCE ON KNOWLEDGE DISCOVERY AND DATA MINING 2006 (KDD'06), vol. 23, 20 August 2006 (2006-08-20), - 23 August 2006 (2006-08-23), pages 207-216, XP055234081, PHILADELPHIA, PA, USA DOI: 10.1145/1150402.1150428 ISBN: 978-1-59593-339-3 * abstract; figures 5, 6, 9-11, 14 * * page 207 - page 213 * * page 216, column 1 * | 1-15 | |
| A | WO 2014/160027 A1 (IMAGE SENSING SYSTEMS INC [US]) 2 October 2014 (2014-10-02) * paragraph [0002] - paragraph [0003]; figures 3, 10, 15-17 * * paragraphs [0031], [0034], [0035], [0038], [0052], [0054] - [0058], [0062], [0065] - [0069], [0076] - [0084] * * paragraphs [0118] - [0121]; claims 1, 6-20 * | 1-15 | |
| A | VARUN CHANDOLA, ARINDAM BANERJEE, AND VIPIN KUMAR: "Anomaly detection: a survey", ACM COMPUTING SURVEYS, vol. 41, no. 3, 15, 1 July 2009 (2009-07-01), pages 1-58, XP055217605, ISSN: 0360-0300, DOI: 10.1145/1541880.1541882 * abstract * * page 1 - page 44 * | 1-15 | TECHNICAL FIELDS SEARCHED (IPC) |

-/--

The present search report has been drawn up for all claims

| Place of search | Date of completion of the search | Examiner |
|---|---|---|
| The Hague | 21 December 2015 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 633 882 B1 (FAYYAD USAMA [US] ET AL) 14 October 2003 (2003-10-14) * abstract; figures 1, 3, 5-10 * * column 2 - column 30 * ----- | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 21 December 2015 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 4186

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2015

| Patent document cited in search report | | Publication date | Patent family member(s) | Publication date |
|---|---|---|---|---|
| WO 2014160027 | A1 | 02-10-2014 | NONE | |
| US 6633882 | B1 | 14-10-2003 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Adaptive event detection with time-varying poisson processes. **A. IHLER et al.** Proceedings of the 12th ACM SIGKDD International Conference on Knowledge Discovery and Data Mining. ACM, 2006, 207-216
- Space-time dynamics of topics in streaming text. **A. POZDNOUKHOV ; C. KAISER.** Proceedings of the 3rd ACM SIGSPATIAL International Workshop on Location-Based Social Networks. ACM, 2011, 1-8
- **H. HEFFES ; D. LUCANTONI.** A markov modulated characterization of packetized voice and data traffic and related statistical multiplexer performance. *IEEE Journal on Selected Areas in Communications,* 1986, vol. 4 (6), 856-868
- **S. L. SCOTT.** A bayesian paradigm for designing intrusion detection systems. *Computational statistics & data analysis,* 2004, vol. 45 (1), 69-83
- **A. HAGHIGHI ; D. KLEIN.** Unsupervised coreference resolution in a nonparametric bayesian model. *Proceedings of the 45th Annual Meeting of the Association for Computational Linguistics, Prague, Czech Republic,* June 2007, 848-855
- Learning systems of concepts with an infinite relational model. **C. KEMP et al.** Proceedings of the 21st National Conference on Artificial Intelligence. Boston, Massachusetts. AAAI Press, 2006, 381-388

- **E. B. SUDDERTH et al.** Describing visual scenes using transformed objects and parts. *Int. J. Comput. Vision,* 2008, vol. 77 (1-3), 291-330
- A bayesian analysis of some nonparametric problems. **T. S. FERGUSON.** The annals of statistics. 1973, 209-230
- **R. M. NEAL.** Markov chain sampling methods for dirichlet process mixture models. *Journal of computational and graphical statistics,* 2000, vol. 9 (2), 249-265
- **J. SETHURAMAN.** A constructive definition of dirichlet priors. *Statistica Sinica,* 1994, vol. 4, 639-650
- **D. ALDOUS.** Exchangeability and related topics. *École d'Été de Probabilités de Saint-Flour XIII,* 1983, 1-198
- Adaptive event detection with time-varying poisson processes. **A. IHLER et al.** Proceedings of the 12th ACM SIGKDD International Conference on Knowledge Discovery and Data Mining. ACM, 2006, 207-216
- **M. D ESCOBAR ; M. WEST.** Bayesian density estimation and inference using mixtures. *Journal of the American Statistical Association,* 1995, vol. 90 (430), 577-588